# EUROPÄISCHE PATENTSCHRIFT

(11) **EP 1 242 507 B1**
(45) Veröffentlichungstag und Bekanntmachung des Hinweises auf die Patenterteilung: **29.10.2003**
(21) Anmeldenummer: 00985106.4
(22) Anmeldetag: 28.11.2000
(51) Int. Cl.: C08G 69/20, C08G 69/18

(54) **FLÜSSIGINITIATOR ZUR BESCHLEUNIGTEN DURCHFÜHRUNG DER ANIONISCHEN LACTAMPOLYMERISATION, VERFAHREN ZU DESSEN HERSTELLUNG UND VERWENDUNG**
LIQUID INITIATOR FOR ACCELERATING THE PROGRESS OF THE ANIONIC LACTAM POLYMERIZATION, METHOD FOR PRODUCING THE SAME AND THE USE THEREOF
INITIATEUR LIQUIDE DESTINE A ACCELERER LA POLYMERISATION ANIONIQUE DE LACTAME, AINSI QUE PROCEDE DE PREPARATION ET D'UTILISATION DUDIT INITIATEUR

(30) Priorität: 21.12.1999 DE 19961818
(43) Veröffentlichungstag der Anmeldung: 25.09.2002
(73) Patentinhaber: EMS-Chemie AG, 7013 Domat/Ems (CH)
(72) Erfinder: SCHMID, Eduard, CH-7402 Bonaduz (CH); LAUDONIA, Ivano, CH-7430 Thusis (CH)
(74) Vertreter: Pfenning, Meinig & Partner
(86) Internationale Anmeldenummer: EP0011881
(87) Internationale Veröffentlichungsnummer: WO01046292

(56) Entgegenhaltungen:
- EP-A- 0 786 482
- EP-A- 0 872 508

## Beschreibung

Die Erfindung betrifft einen neuartigen Flüssiginitiator für die beschleunigte Durchführung der Polymerisation von Lactam, dessen Herstellung, seine Verwendung sowie die daraus hergestellten Gebrauchsgegenstände.

Flüssigkatalysatoren für die Polymerisation von Lactam sind seit längerem bekannt. Sie beinhalten Zusätze zu Natriumcaprolactamat, die bewirken, daß es bei Raumtemperatur flüssig ist. Diese Katalysatoren beschleunigen die Polymerisation nicht ausreichend und müssen in relativ hoher Konzentration angewendet werden. Beispiele sind DE 2 230 732 C3 sowie EP 0 438 762 B1. Mit DE 16 602 683 und DE 19 602 684 sind erstmals Flüssigkatalysatoren beschrieben, die zusätzlich eine beschleunigende Wirkung auf die Polymerisation ausüben. Sie bestehen insbesondere aus N-substituierten, cyclischen Harnstoffen bzw. N-substituierten Säureamiden, einem Acylierungsmittel für Lactam und käuflichem Natriumcaprolactamat, gelöst in Lactam-6. Nachteil ist, daß sie in relativ hoher Konzentration angewendet werden müssen, was die Polymereigenschaften beeinflussen kann, indem z.B. der Modul herabgesetzt wird, ein Ausschwitzen der Solvatisierungskomponenten erfolgen kann sowie auch die Haftung zu als Option verwendeten Füllstoffen beeinträchtigt werden kann.

Mit DE 197 15 679 A1 ist eine Synthese von Flüssigkatalysator aufgezeigt, die viele dieser Nachteile eliminiert. So wird direkt im Solvatisierungsmittel lactamfreies Natriumcaprolactamat hergestellt und mit bevorzugt Carbodiimid umgesetzt. Zur Durchführung der Lactampolymerisation genügt bereits ein Gewichtsanteil von ca. 1 % solcher Katalysatoren.

Aus der DE 196 03 305 C2 ist weiterhin ein flüssiges Mehrkomponentensystem für die Durchführung der anionischen Lactampolymerisation bekannt bei dem ein Solvatisierungsmittel, ein Katalysator und ein Aktivator zusammen als Mehrkomponentensystem eingesetzt wird. Bei diesem Mehrkomponentensystem werden somit die einzelnen Komponenten in solvatisierter Form als Flüssigkatalysator eingesetzt. Nachteilig ist hierbei u.a. auch die begrenzte Lagerfähigkeit.

In den bisher offenbarten Verfahren zur Polymerisation von Lactam mit Hilfe von Flüssigkatalysator mit beschleunigender Wirkung sind hauptsächlich Natriumcaprolactamat, acylierende Verbindungen sowie Solvatisierungsmittel die verwendeten Ausgangsstoffe. Für viele Anwendungen sind jedoch Flüssigsysteme erwünscht, die nur aus einer Komponente bestehen und die kein Natriumcaprolactam enthalten und damit in noch geringerer Konzentration angewendet werden können. Ziel ist es weiterhin, natriumcaprolactamatfreie Flüssigsysteme bereit zu stellen, die die Startphase der Polymerisation gezielt zu steuern vermögen.

Ferner sind lagerstabile Flüssigsysteme von hohem Interesse, welche Bausteine mitenthalten, die das Verarbeitungsverhalten sowie die Endprodukteigenschaften positiv beeinflussen, wie z.B. das Entformen der Fertigteile erleichtern oder auch die Oxidations-, Hitze- und Bewitterungsstabilität verbessern.

Die Aufgabe wird in Bezug auf das Flüssigsystem durch die Merkmale des Patentanspruches 1 in Bezug auf das Herstellungsverfahren durch die Merkmale des Patentanspruches 20 gelöst. Das Polymergranulat ist durch die kennzeichnenden Merkmale des Anspruchs 24 definiert. Die Verwendung des FI ist in Anspruch 29 angegeben. Die Unteransprüche zeigen vorteilhafte Weiterbildungen auf.

Die Erfindung betrifft somit einen Flüssiginitiator (FI), ein Verfahren zu dessen Herstellung und die Verwendung.

Der erfindungsgemäße Initiator ersetzt somit die aus dem Stand der Technik bisher bekannten Mehrkomponentensysteme. Der Initiator enthält dabei inhärent die Aktivatorfunktion und bildet in einem definierten zweiten Schritt den Katalysator.

Kennzeichen der erfindungsgemäßen Initiatoren ist, daß das für die anionische Polymerisation von Lactam notwendige Metall-Lactamat noch nicht vorliegt sondern in einer Vorausreaktion erst gebildet wird. Die Polymerisation von Lactam mit Hilfe der erfindungsgemässen Initiatoren kann in diskontinuierlichen und in kontinuierlichen Verfahren erfolgen und führt zu Gebrauchsgegenständen von, im Vergleich zum Stand der Technik, sehr deutlich erhöhtem Gebrauchswert, weil der erfindungsgemässe Flüssigkatalysator nicht nur die beschleunigte Polymerisation von Lactam bewirkt, sondern direkt auch die Endprodukteigenschaften in gezieltem Masse verbessern kann.

Besonders günstig ist, dass das Solvatisierungsmittel S aus einer Vielzahl aprotischer Verbindungen gezielt ausgewählt und an den Strukturaufbau des Initiators angepasst werden kann, sodass über die Umsetzung protischer Verbindungen P mit Carbodiimid und Deprotonierung hergestellte polymerisationsauslösende Verbindungen meist solvatisiert und verflüssigt werden können, so dass eine Vielzahl von Flüssigkatalysatoren, angepasst an die jeweiligen Verwendungszwecke, möglich sind.

Vorteilhaft ist weiterhin, dass über die Wahl des Carbodiimids Initiatoren möglich sind, welche die Polymerisation mit unterschiedlicher Zeitverzögerung auslösen. Dies ist insbesondere vorteilhaft bei der Herstellung von Faserverbundwerkstoffen, wo es die Hauptforderung ist, dass während eines definierbaren Zeitintervalls eine tiefe Viskosität der aktivierten Schmelze vorliegt, welche Imprägnation der vorgebildeten Fasergebilde erlaubt, die dann aber anschliessend auch vollständig auspolymerisiert, so dass z.B. Verbundwerkstoffe mit hervorragenden Gebrauchseigenschaften resultieren.

In vielen Anwendungsfällen ist ein zeitverzögerter Start des Viskositätsanstiegs der frisch aktivierten Lactamschmelze von hohem Anwendungsinteresse, insbesondere dann, wenn die Schmelze nach speziellen Verfahren direkt verarbeitet wird und keine Zwangsmischung mehr erfolgen kann, wie z.B. bei Tauch- und Sprühprozessen, beim Rotationsguss, im RTM-Verfahren, bei der Pultrusion, im Monomerguss und im Reaktionsspritzguss.

In vielen solchen Verarbeitungsfällen ist es anwendungsentscheidend, dass die frisch aktivierte Lactamschmelze in ihrem Polymerisationsverhalten an die Verfahren angepasst werden kann, und die Matrix nach erfolgter Polymerisation in ihrem Gebrauchswert verbessert ist. So ist es wichtig, dass schon die Schmelze einen Oxidationsschutz erfährt, erhöht fliessfähig ist und nach erfolgter Polymerisation das Fertigteil spontan entformt und gegen Abbau geschützt ist.

Es ist ein besonderer Vorteil, dass der Flüssiginitiator nur in einer geringen Anwendungskonzentration von 1-10 % zugefügt werden muss, weil die protische Komponente P, welche während der Synthese Teil des polymerisationsauslösenden Anteils wird, während der Polymerisation wieder freigesetzt wird und danach die vorgesehene Zusatzaufgabe übernehmen kann.

Für solche Zusatzaufgaben muss damit in vielen Fällen dem Initiator nicht separat eine speziell auszuwählende Verbindung zugefügt werden, welche dann ebenfalls verflüssigt werden müsste, was das Anwendungsvolumen des Flüssiginitiator erhöhen würde und die in vielen Fällen auch die Aktivität des Flüssiginitiators beeinträchtigen würde.

Im Falle der dargestellten Erfindung ist es so, dass für die vorgesehene Zusatzaufgabe aus der Vielzahl der zur Verfügung stehenden Additive protische Verbindungen ausgewählt werden können, welche unerwarteterweise beim Strukturaufbau des erfindungsgemässen Flüssiginitiators die Aufgabe des Lactamats übernehmen.

Für den Reaktionsablauf ist es wahrscheinlich, dass sich nach Eintrag des Flüssiginitiators in die Lactamschmelze, das aktivierte Lactam und das Lactamat in speziellen Reaktionsvorstufen bilden und dabei die protischen Verbindungen P wieder freisetzen, wonach diese ihre Zusatzaufgaben übernehmen können.

Nach Deprotonierung von P mit der Base B und Reaktion mit dem Carbodiimid kann man sich den Strukturaufbau des Initiators in etwa wie folgt vorstellen; 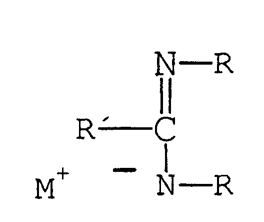 wobei R' die deprotonierte, protonische Komponente ist und der eine Stickstoff nun eine negative Ladung trägt und das Kation M⁺ abgeleitet ist von Alkali- oder Erdalkalimetallen sowie Tetraalkylammonium sein kann.

Wird dieser erfindungsgemässe Initiator nun in die Lactamschmelze eingetragen, wobei die ebenfalls protische Verbindung, das Lactam, nun in hohem Überschuss vorliegt, erfolgt ein Tausch von R' gegen Lactam, wobei R' protoniert und wieder freigesetzt wird und die der P zugeordnete Aufgabe, z.B. die Stabilisierung, übernehmen kann.

Gleichzeitig wird die negative Ladung am "N" von einem Lactam ein H-Atom übernehmen, wobei Lactamat, der sogenannte Katalysator für die anionische Lactampolymerisation, entsteht.

Weil sich nun durch Tausch von R' gegen Lactam am acylierenden Carbodiimid eine aktivierte Lactamstruktur gebildet hat und über einen H-Transfer gleichzeitig Lactamat entstanden ist, kann nun die aktivierte, anionische Lactampolymerisation ablaufen.

Untersuchungen bezüglich Toxizität haben gezeigt, dass handelsübliche Carbodiimide meist einen Restanteil an Isocyanat enthalten, welcher für die hohe Umweltgefährdung, insbesondere Toxizität solcher Produkte hauptsächlich verantwortlich ist. Durch den Umsatz des Carbodiimids C mit der starken Base B während der erfindungsgemässen FI-Synthese, werden nun solche Restanteile des reaktiven Isocyanats abgebaut, so dass die Toxizität des FI reduziert ist.

Ergänzend geht natürlich auch das Carbodiimid einen Umsatz mit dem deprotonierten P ein, so dass seine Reaktivität herabgesetzt ist und auch seine Flüchtigkeit deutlich reduziert ist.

Im wesentlichen verbleibt noch die hohe Basizität, die beim Umgang mit dem FI zu beachten ist.

Als Solvatisierungsmittel S eignen sich aliphatische, cycloaliphatische und aromatische organische Verbindungen mit solvatisierend wirkenden Strukturelementen, die keine aziden H-Atome besitzen. Solvatisierende Strukturelemente im Sinne der Erfindung sind beispielsweise Heteroatome und Heterogruppen der Art:
-O-,-CO-,-O-CO-O-,-SO₂-,-CO-NR-,-CO-O-,-NR-CO-O-,-NO-, -CN-, -RN-CO-NR-,-NR-,-P(OR)₃-,-PO(OR)₃- sowie Phenoläther.

Die Striche an den Strukturelementen bedeuten dabei die chemischen Bindungen der Strukturelemente in der organischen Verbindung, welche das Solvatisierungsmittel darstellt und ein Solvatisierungsmittelmolekül mehrere solvatisierende Strukturelemente enthalten kann.

Das Solvatisierungsmittel kann auch ein Gemisch mehrerer Solvatisierungskomponenten sein.

Geeignete Solvatisierungskomponenten sind insbesondere N-alkylierte, cyclische Carbonsäureamide wie N-alkyliertes Lactam-4, -5 und -6 beispielsweise N-Methyl-, N-Hexyl-, N-Cyclohexyl und N-Octyllpyrrolidon sowie N-Octyl und N-Methylcaprolactam und vollständig N-alkylierte, insbesondere cyclische Harnstoffderivate, wobei der Alkylrest R, 1-12 C-Atome enthalten kann.

Diese Produkte entsprechen den Formeln 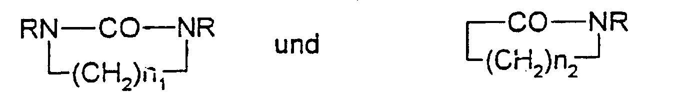 wobei n₁ 2 und 3 sowie n₂ 3 bis 5 ist und R ein Alkylrest mit 1 bis 12 C-Atomen, der auch Heterogruppen und Heteroatome wie -O- enthalten kann, ist.
Geeignete, nicht cyclische Harnstoffderivate und Säureamide sind z.B. Tetraalkylharnstoff, wie z.B. Tetrabutylharnstoff, Diäthylacetamid und Dibutylformamid.

Weitere Solvatisierungsmittel sind z.B. das cyclische Propylencarbonat, verätherte Polyole, z.B. der Grundstruktur H₃C-O-(CH₂-CH₂-O)ₙ-CH₃ mit einem Molekulargewicht bis ca. 1500, veresterte Polyglykole wie z.B. Di- und Triäthylenglykoldiacetat, flüssige Phthalsäureester und cyclische Äther wie z.B. Dioxan. Oft werden Mischungen der beschriebenen Solvatisierungsmittel verwendet.

Das Solvatisierungsmittel, S, muss in der Lage sein mit Hilfe seiner solvatisierenden Strukturelemente das Umsetzungsprodukt und dabei insbesondere das zugehörige Kation so zu solvatisieren, dass ein bei Raumtemperatur flüssiges, lagerstabiles Produkt entsteht. Ferner muss es genügend stabil sein um als Reaktionsmedium zu dienen. Es muss bei der Auslösung der Polymerisation von Lactam, je nach gewählter Verfahrensvariante, genügend hoch sieden um keine Blasenbildung der Schmelze zu bewirken oder auch z.B. bei einer kontinuierlichen Verfahrensweise, z.B. in einem Doppelwellenextruder, zufolge genügender Flüchtigkeit teilweise oder vollständig entfernt werden können. Damit eignen sich je nach vorgesehenem Anwendungsverfahren sowohl hoch- als auch tiefersiedende Komponenten S.

Will man z.B. in einem diskontinuierlichen Prozess Verstärkungsfasergebilde mit frisch aktivierter Lactamschmelze blasenfrei imprägnieren, so sind Solvatisierungsmittel mit einem Siedepunkt von mindestens 200 °C vorteilhaft; will man im Extruder Lactam kontinuierlich zum Polylactam umsetzen, so ist ein tiefsiedendes Solvatisierungsmittel mit Siedepunkt z.B. unter 180 °C insbesondere dann vorteilhaft, wenn eine weichmachende Wirkung unerwünscht ist.

In vielen Fällen ist es speziell vorteilhaft, die Solvatisierungskomponente durch Verbindungen mit spezieller Wirkung zu erweitern. Diese können z.B. mit-helfen, das Polylactam nach erfolgter Polymerisation gegen die Einwirkung von Licht, Hitze und Oxidation zu schützen. Sie sind bevorzugt so auszuwählen, dass sie keine aziden H-Atome enthalten.

Auch Komponenten in geringen Anteilen, die eine nukleierende oder entformende Wirkung im Polylactam ausüben, sind oft erwünscht, ebenso Zusätze mit weichmachender Wirkung, wie z.B. o-Phthalsäureester, vollständig veresterte Polyole z.B. von Äthylenglykol oder Glycerin mit Essigsäure.

Weitere, oft hilfreiche Zusätze betreffen z.B. optische Aufheller und sogenannte Tracer. Die notwendige Einsatzmenge ist dabei überprüft und Stand der Technik und kann den technischen Datenblättern zu solchen Produkten entnommen werden.

Das Carbodiimid C kann dabei eine aromatische, aliphatische und cycloaliphatische Grundstruktur besitzen. Bei den aliphatischen Carbodiimiden sind die bevorzugt, welche einen linearen oder verzweigten Rest mit 1-20 C-Atomen besitzen. Besonders günstig sind cycloaliphatische Carbodiimide. Bevorzugt sind dabei N,N'-Dicyclohexylcarbodiimide, die auch substituiert sein können.

Speziell geeignete Carbodiimide sind N,N'-Diisopropylcarbodiimid, N,N'-Di(o-tolyl)-carbodiimid, N,N'-Dicyclohexylcarbodiimid, 2,2',6,6'-Tetraisopropylphenylcarbodiimid und Poly-(2,2-diisopropyl)-pphenylencarbodiimid.

Geeignete protische Mittel P mit einem pk_{A} von mindestens 13 sind z.B. Alkohole ab C-Zahl 1 aufwärts bis ca. 12, bevorzugt bis 6. Geeignete Vertreter sind z.B. Methanol, Äthanol, Propanol, Butanol, Hexanol und Benzylalkohol. Besonders günstig ist Methanol. Ferner sind es Amine wie z. B. Tridecylamin, das oft als flüssiges Isomerengemisch vorliegt, Cyclohexylamin, ferner OH-terminierte Polyäthylenoxide, Polypropylenoxide und Polybutylenoxide mit bevorzugt Molekulargewicht unter ca. 400, die bevorzugt nur einen Anteil von P ausmachen.

Speziell geeignete protische Komponenten P sind auch Carbonsäureamide. Abhängig von ihrem strukturellen Aufbau können sie die Startphase der Polymerisation wesentlich beeinflussen und Zusatzaufgaben im Fertigteil übernehmen, wie z.B. das Entformungsverhalten verbessern. Bausteine für Carbonsäureamide sind Monomere mit 1-20 C-Atomen z.B. Mono- und Diamine wie Hexylamin, Cyclohexylamin, Isotridecyclamin, Diaminohexan und äthergruppenhaltige Mono- und Diamine sowie Mono- und Dicarbonsäuren wie Essigsäure, 2-Ethylhexansäure, Pelargonsäure und Adipinsäure. Um niedermolekulare Carbonsäureamide bereitzustellen wird dabei z.B. ein Monoamin mit einer Monocarbonsäure oder ein Diamin mit 2 Moleinheiten Monocarbonsäure oder auch eine Dicarbonsäure mit 2 Moleinheiten Monoamin umgesetzt.

Ferner eignen sich als protische Verbindungen spezielle, meist sterisch gehinderte Amine, die das Polylactam gegen Hitze- und Lichteinwirkung zu stabilisieren vermögen, wie z.B. das Handelsprodukt Tinuvin® 770 von Ciba SC®, sowie ergänzend die OH-Gruppen mitenthaltenden Stabilisatoren Chimassorb 81® und Tinuvin 571® ebenfalls von Ciba CS.

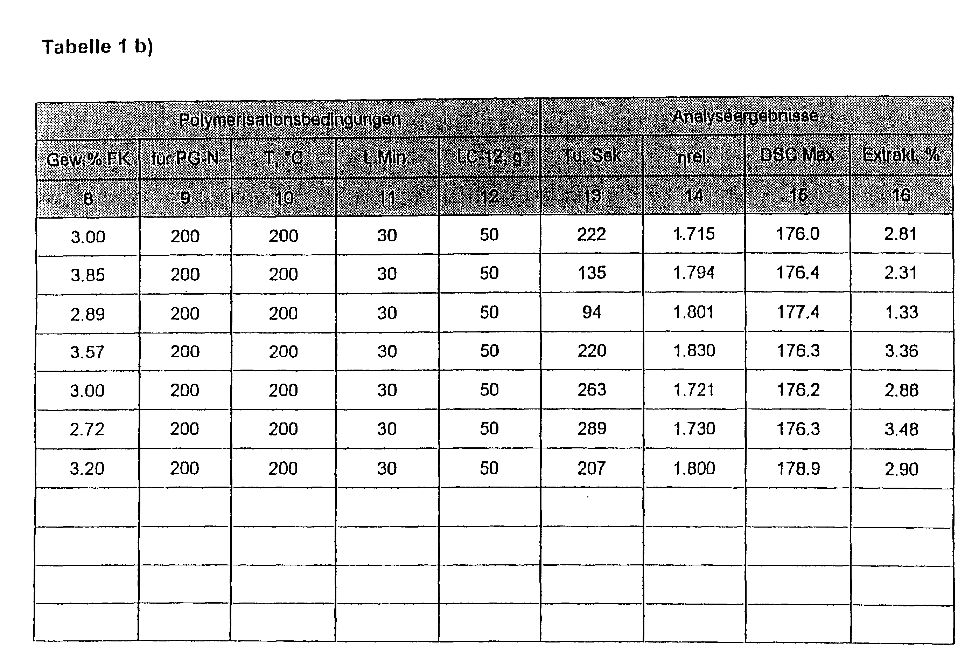

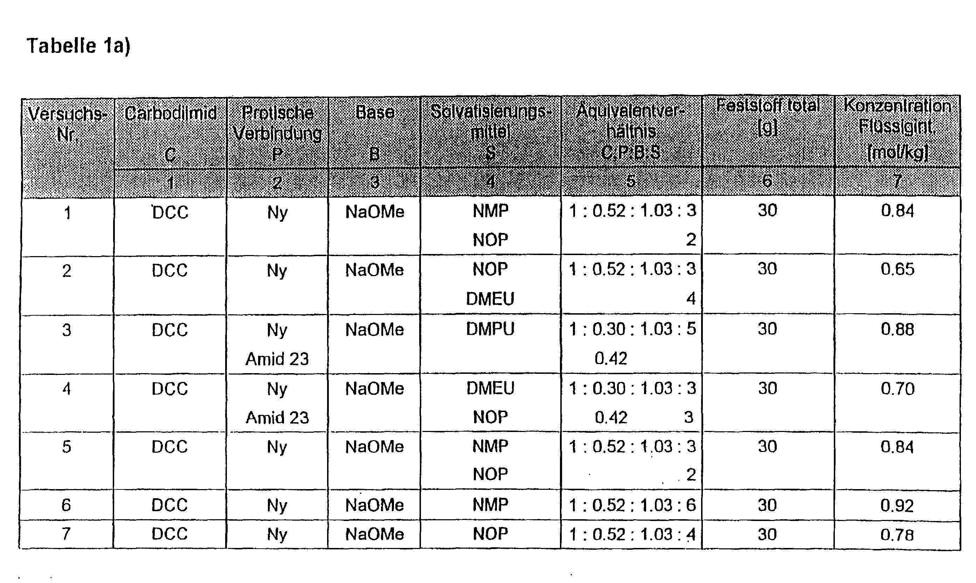

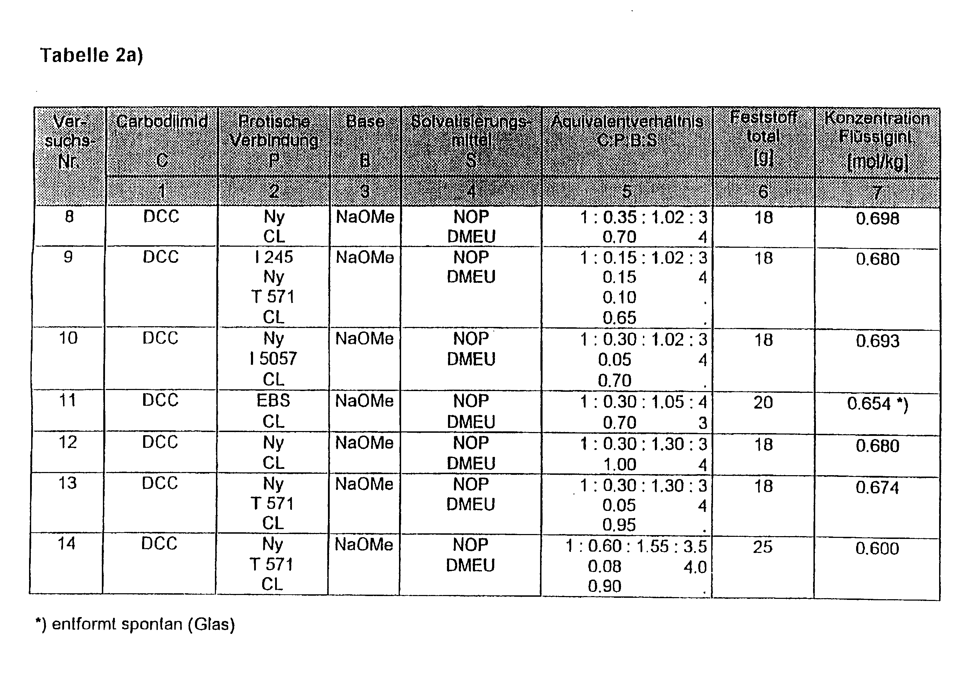

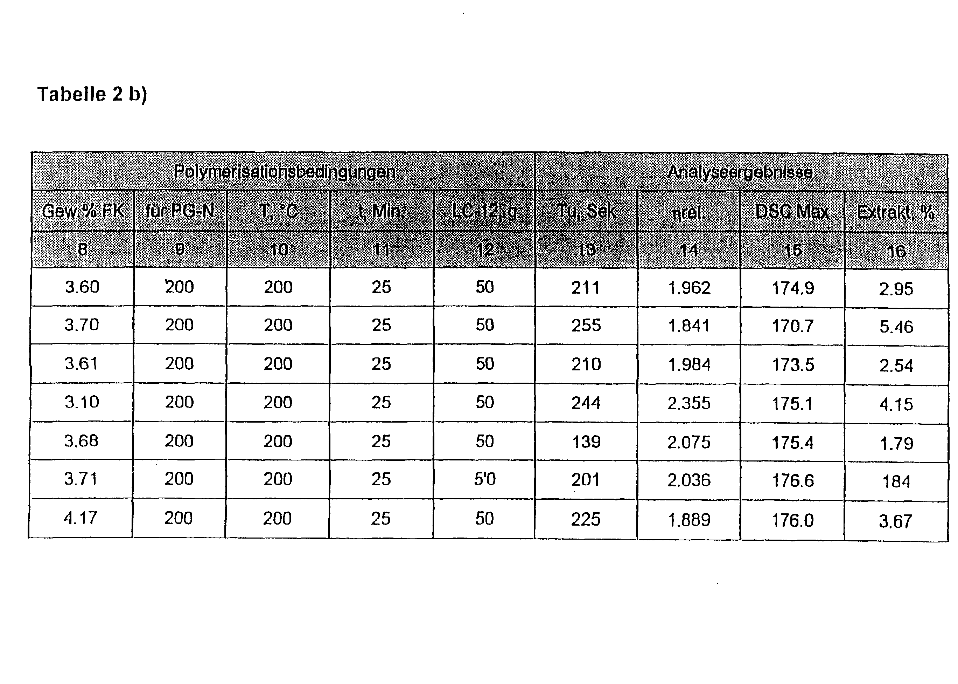

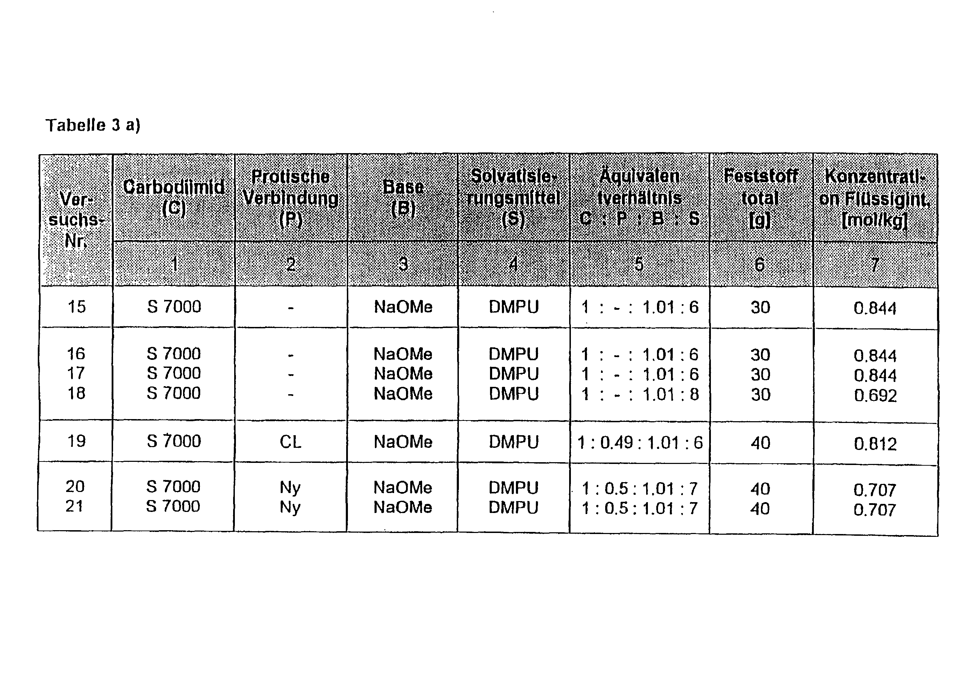

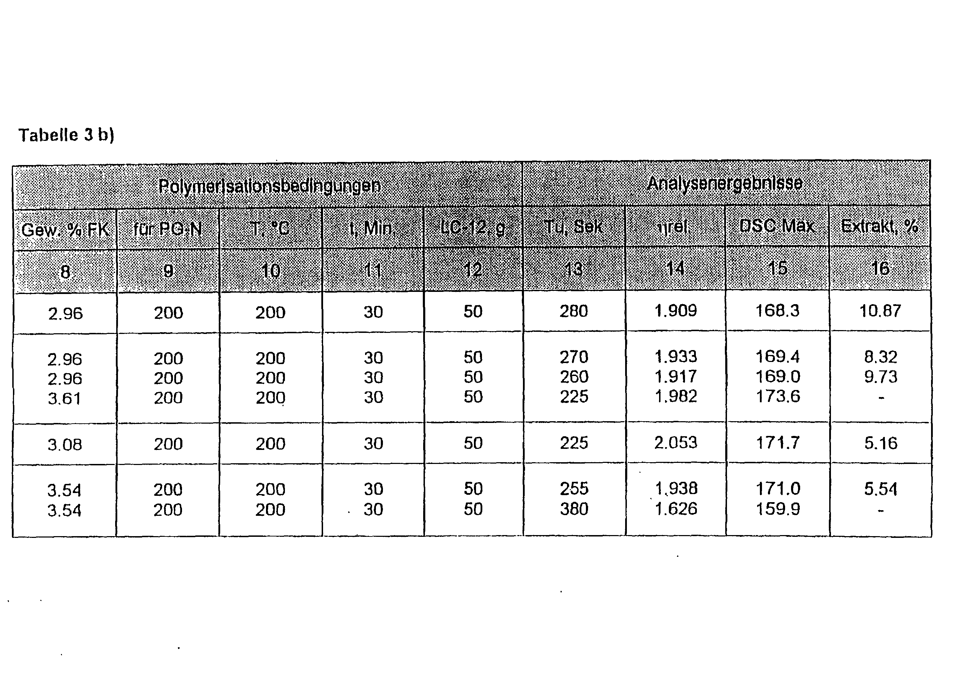

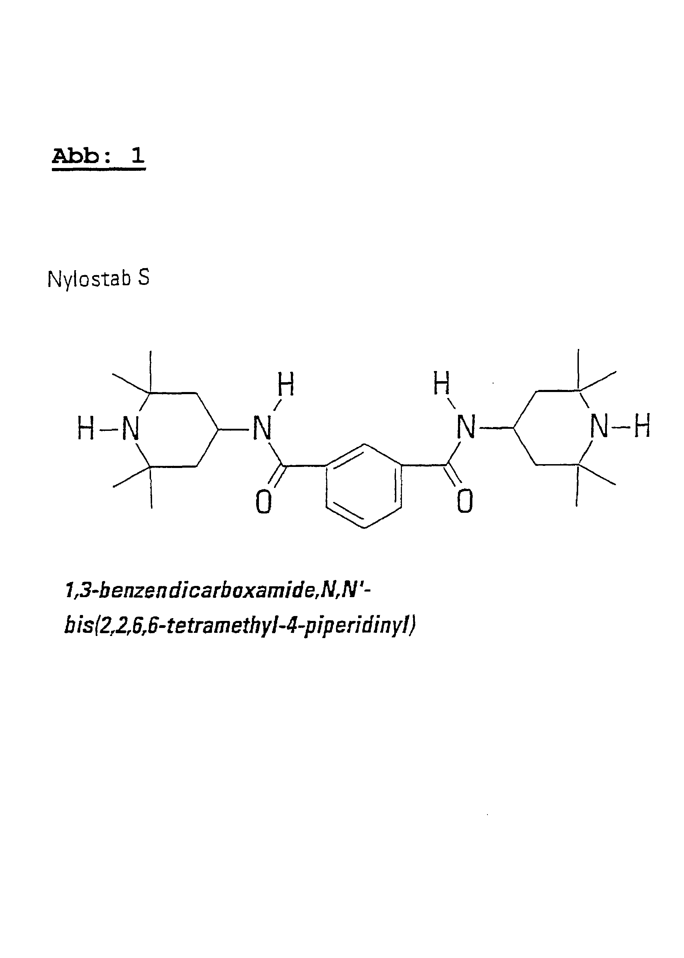

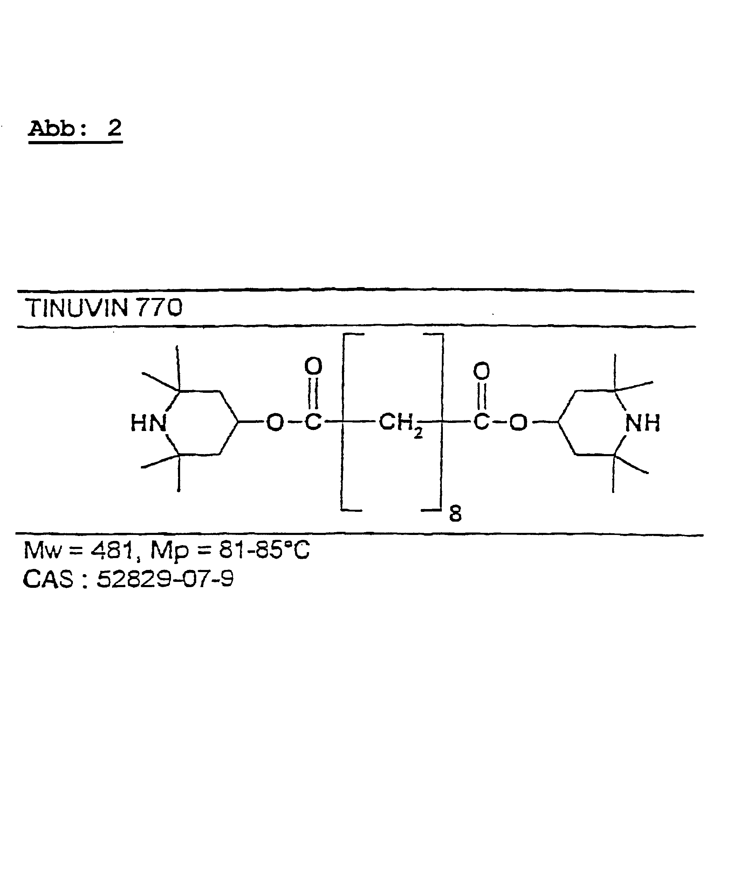

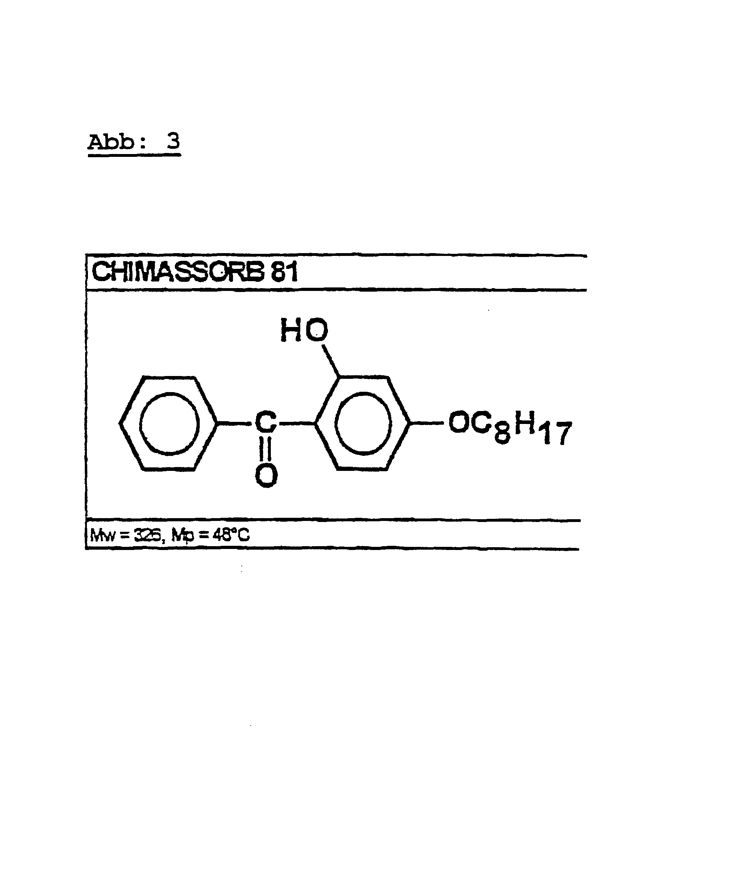

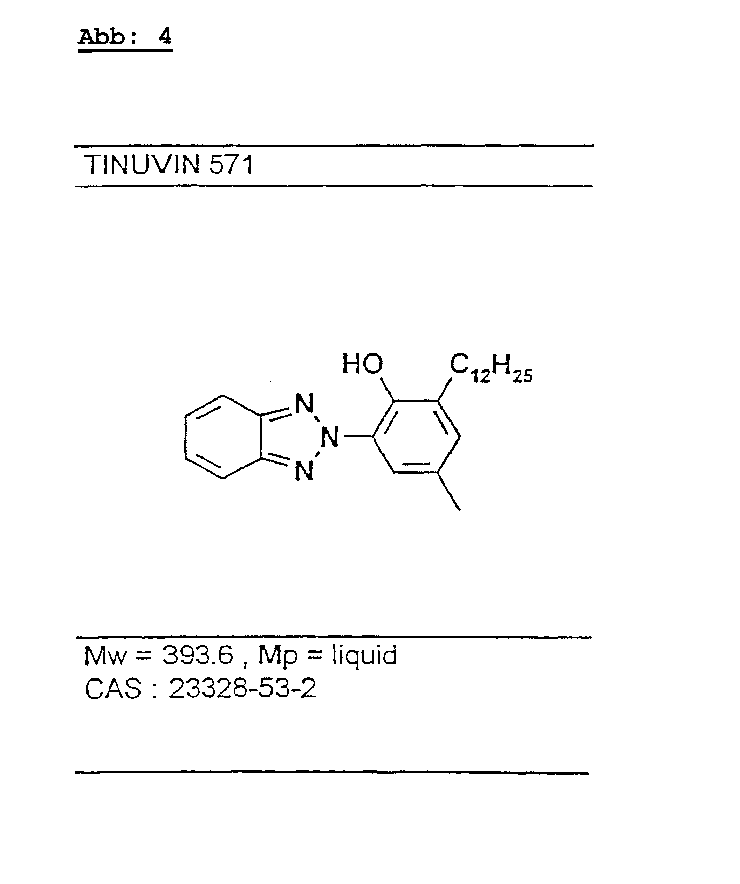

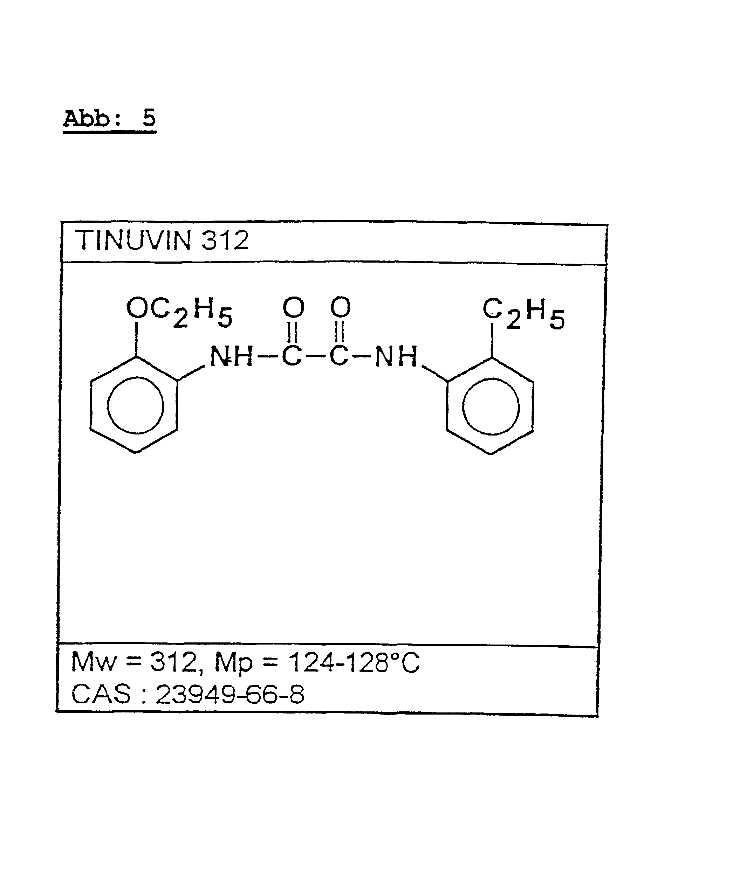

Geeignete Carbonsäureamide mit ausgezeichneter stabilisierender Wirkung sind ferner Tinuvin 312® von Ciba SC sowie Nylostab® S-EED von Clariant, wobei dieses Produkt zusätzlich sterisch gehinderte Aminogruppen enthält. Diese Amine werden auch als "hindered amine light stabilizer" (HALS) bezeichnet. Die chemische Struktur dieser Handelsprodukte sind in der Abb. 1 bis 5 dargestellt.

Dies sind nur beispielhaft aufgeführte Stabilisatoren, denn sterisch gehinderte Amine, Carbonsäureamide und Hydroxidgruppen insbesondere phenolisches OH mitenthaltende Stabilisatoren sind wesentliche Verbindungsklassen, die als Hitze- und Lichtstabilisatoren für Polyamide dienen.

Weitere, geeignete Anlagerungsverbindungen sind z.B. Butanonoxim, Malonsäureester wie etwa Diäthylmalonat, Azoverbindungen wie 1.2.4-Triazol und 3.5-Dimethylpyrazol. Solche Verbindungen machen oft nur einen Anteil von P aus und werden z.B. bevorzugt in Kombination mit Methylat eingesetzt.

Die für die Neutralisationsreaktion von P eingesetzte Base B muss eine für den Reaktionsablauf genügende Basizität aufweisen und bevorzugt nach der Neutralisation unter Wärme- und Vakuumeinwirkung kontinuierlich abgezogen werden können. Alternativ kann sie, wie z.B. das Methylat, direkt als protisches Mittel P wirken.

Bevorzugt eingesetzte Basen haben ein Alkali-, Erdalkali- oder Tetraalkylammonium Kation und ein Alkoholat, Amid, Hydrid oder Alkylat als Anion. Ist das Anion z.B. Alkoholat oder Amid, kann es direkt als P wirken.

Beispiele sind Alkali- und Erdalkalimetallalkoholate, besonders Methylate und Ethylate, wie z.B. Natriummethylat und -ethylat oder Alkoholate von Lithium, Kalium und Magnesium oder auch Tetralkylammoniumalkoholat, Metallhydride, wie z.B. Natriumhydrid, Metallalkyle wie z.B. Buthyllithium, Amide, wie z.B. Natriumamid, oder auch Alkali- und Erdalkalimetalle, die z.B. mittels Eisen(II)-Ionen aktiviert sein können.

Wird als Base ein niedermolekulares Alkoholat von Alkali oder Erdalkalimetall, wie z.B. Natriummethylat, verwendet, so wird es vorteilhaft direkt gelöst im entsprechenden Alkohol zugefügt, der während und nach erfolgter Umsetzung über Wärme- und Vakuumeinwirkung wieder entfernt wird. Dieses Konzept kann auch für andere der aufgeführten Basen wie z.B. Buthyllithium, gelöst in Heptan, angewendet werden.

Bei extrem luft- und feuchteempfindlichen Basen, wie z.B. Metallhydriden oder Alkalimetall, wie z.B. Natrium, kann Petroläther oder ein Alkan direkt als Schutzmittel für die Lagerung und Zugabe dienen, wonach Entferung dieser Art von Schutzmittel wieder über Wärme- und Vakuumeinwirkung erfolgt.

Diese Löse- und Schutzmittel für die Base unterscheiden sich somit in Aufgabe und Wirkung von der solvatisierenden Komponente S.

Der erfindungsgemässe Flüssiginitiator besteht im wesentlichen aus einer solvatisierend, d.h. verflüssigend wirkenden Komponente dem Solvatisierungsmittel S welche die negativ geladene, beschleunigend wirkende Komponente des Flüssiginitiator sowie das zugehörige Kation solvatisiert und verflüssigt, also dem Carbodiimid C mit aromatischer bzw. (cyclo)-aliphatischer Grundstruktur, umgesetzt mit einer protischen Verbindung P und durch eine starke Base B deprotoniert, wobei der Umsatz von C auch direkt mit der Base erfolgen kann.

Abhängig vom Typ des gewählten Carbodiimids, kann der Umsatz dabei über Bildung einer echten chemischen Bindung (bevorzugt bei aromatischem Carbodiimid) bzw. über Bildung einer durch das Kation in seiner Struktur stabilisierten Additionsverbindung erfolgen (cyclo)-aliphatisches Carbodiimid).

Dabei herrscht insbesondere eine breite Auswahl in bezug auf die protische Verbindung P, deren pk_{A} grösser als 13 sein sollte.

Weil die protische Verbindung P während der Polymerisation von Lactam bei Verwendung des erfindungsgemässen Initiators wieder frei gesetzt wird, kann sie danach in der Polylactammatrix vielfältige Zusatzaufgaben übernehmen wie: Stabilisierung der Polylactammatrix gegen Hitze- und Bewitterungsabbau, verbessertes Entformen des Fertigteils und erhöhter Schmelzefluss des Polylactams.

Die protische Verbindung P kann auch eine Chromphorwirkung im Fertigteil ausüben mit z.B. Farbgebung und Fluoreszenz.

Wegen der vielfältigen, möglichen Wirkungen der Komponente P werden vorteilhafterweise auch Kombinationen von P eingesetzt, wobei z.b. ein Anteil für die Stabilisierung, ein Anteil für die verbesserte Verarbeitung (Schmelzefluss und Entformung) und ein möglicherweise verbleibender Anteil direkt die Base, B, ist.

Angepasst an die Wahl der protischen Verbindung, P, und insbesondere ihre Zusammensetzung muss gezielt auch das Solvatisierungsmittel S ausgewählt werden, so dass vorteilhaft mit einem minimalen Solvatisierungsmittelanteil die vollständige Verflüssigung des Umsetzungsproduktes erfolgt.

Als allgemeine Regel erfolgt die Herstellung des Flüssiginitiators FI direkt in dem Solvatisierungsmittel, S.

Dabei sind bevorzugt gut getrocknete (von Feuchte befreite) Komponenten zu verwenden und es wird unter Schutzgas gearbeitet.

Bevorzugt werden die Komponenten in einem Molverhältnis von je 1 zueinander eingesetzt, wobei das Carbodiimid, die Basis für die Stöchiometriefestlegung ist.

Der Molanteil der Base B, sollte dabei vorteilhafterweise leicht über 1 (bezogen auf Carbodiimid C) liegen und kann C z.B. um 10 Äquivalent-% übersteigen damit sich das gesamte Carbodiimid, mit der deprotonierten Verbindung P und gegebenenfalls direkt mit der verbleibenden Base B umsetzen kann und z.B. auch Restanteile an Isocyanat vollständig umgesetzt werden.
Angepasst an die gewünschte Wirkung von P kann somit P in seiner Zusammensetzung gezielt variiert werden. Ein Molanteil protischer Verbindung, P, der über C bzw. B wesentlich hinausgeht, sollte jedoch vermieden werden, weil dadurch eine Beeinträchtigung der Katalysatorwirkung erfolgen kann.

Vorteilhafterweise wird P in einem Unterschuss bezogen auf C angewendet, wobei dann die nicht für die Neutralisation von P benötigte Base B die Wirkung von P übernimmt und sich mit C umsetzt.

Die Synthese muss im wesentlichen so gesteuert werden, dass möglichst der gesamte Anteil der protischen Verbindung P, deprotoniert wird und sich mit C umsetzen kann. Ein zum mindestens geringer Überschuss an B ist dabei vorteilhaft.

Zur praktischen Durchführung des Verfahrens bieten sich verschiedene Möglichkeiten an, wobei jeweils angestrebt wird, die Synthese direkt in S durchzuführen und keine Zwischenprodukte als Feststoff zu isolieren.

Im wesentlichen erfolgen im Solvatisierungsmittel, S, somit Umsatz von C mit P und Deprotonierung mit einer starken Base B, wobei die Komponenten so gewählt werden, dass ein bei RT-flüssiger und aktiver Flüssigkatalysator entsteht.

Dabei kann man im wesentlichen so vorgehen, dass man P mit Hilfe von B deprotoniert und sodann mit C umsetzt, wobei C schon von Anfang an mitanwesend sein kann. Dabei kann die Reaktion auch so ablaufen, dass sobald die Reaktionslösung in den stark basischen pH-Bereich übergeht, P mit C reagiert und sodann die Neutralisation direkt am Umsetzungsprodukt von P mit C erfolgt, was insbesondere im Falle von aromatischem Carbodiimid der Fall ist.

Dieser Reaktionsablauf lässt sich wie folgt darstellen, wobei R'-H die protische Verbindung P darstellt: 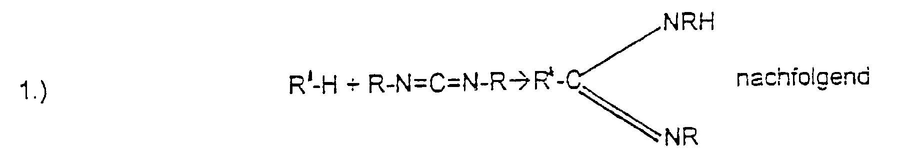 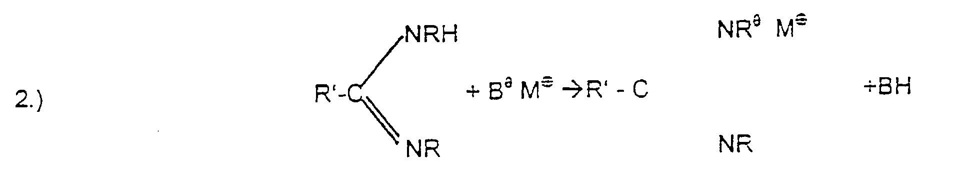 wobei B^{θ} die Base, und BH die protonierte Base darstellen, während M^{⊕} das zugehörige Kation ist.

Wird P zuerst deprotoniert und sodann Carbodiimid C zugefügt, so erfolgt im Fall von aromatischem Carbodiimid wohl folgender Reaktionsablauf:

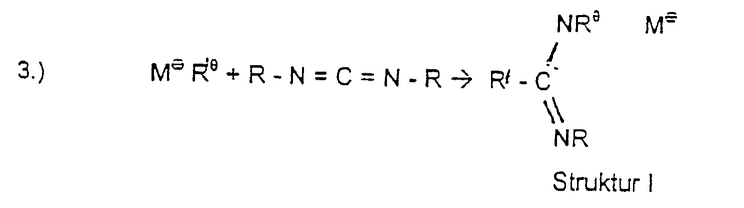

Bei cycloaliphatischem Carbodiimid ist davon auszugehen, dass das deprotonierte P mit C eine Art Additionskomplex ausbildet, der später bei Zugabe des Flüssiginitiator zur Lactamschmelze zunächst langsam in die Struktur I übergeht, sodass die Auslösung der Lactampolymerisation mit Zeitverzögerung einsetzt, was in vielen Fällen ausserordentlich erwünscht ist.

Den Reakationsverlauf bei Zugabe von deprotoniertem P zu C kann man dabei wie folgt darstellen:

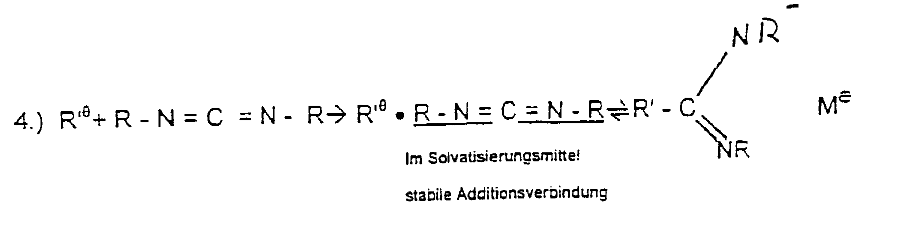

Die genaue Struktur des Flüssiginitiators ist nicht abschliessend bekannt. In der Darstellung über die Reaktionsverläufe bedeutet je M^{⊕} das Kation, im Allgemeinen Na^{⊕}, das über das Anion von P und das Carbodiimid und insbesondere das zusätzliche Solvatisierungsmittel S in geeigneter räumlicher Anordnung seine Koordinationsstellen so besetzen kann, dass Verflüssigung zum Flüssiginitiator erfolgt. In der einfachen Modellvorstellung kann man als Vergleich das Lösen eines Salzes in Wasser heranziehen, wobei Wasser Koordinationsstellen mitbesetzt, also die Funktion des Solvatisierungsmittels ausübt.

Nimmt man zum weitern Verständnis das Umsetzungsprodukt von Cabonsäureamidanion mit aromatischem Carbodiimid so ergibt sich ein Anion der Struktur: 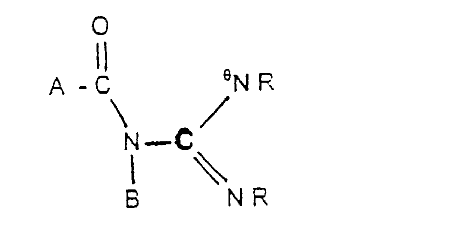 bei dem 3 solvatisierungsfähige "N" direkt an einem zentralen C-Atom angeordnet sind, worauf wohl die gute Solvatisierungsfähigkeit beruht.

Die Flüssiginitiator-Synthese lässt sich im praktischen Versuch z.B. nach folgenden, beispielhaften Reaktionsabläufen durchführen:
- P wird in S gelöst und danach über Zugabe der Base, B deprotoniert, wobei die Temperatur der Reaktionslösung z.B. 60-120 °C beträgt und zur vollständigen Entfernung des Reaktionsproduktes unter Vakuumeinwirkung gearbeitet wird, oder
- man fügt die Base, B dem S zu, wobei B z.B. als fein verteilter Feststoff vorliegen kann, sodann fügt man P zu und entfernt unter Wärme und Vakuumeinwirkung die protonierte Base.

Die deprotonierte Verbindung P kann bei der Umsetzungstemperatur von z.B. 80-100 °C vollständig oder teilweise ausfallen.

Nun wird das Carbodiimid C zugefügt und gegebenenfalls unter Wärme sowie bie Bedarf auch Vakuumeinwirkung nachreagiert und danach abgekühlt, wonach der bei RT flüssige Initiator vorliegt.

Die Zugabe der Komponenten erfolgt dabei bevorzugt portionen- bzw. tropfenweise damit der Reaktionsablauf gezielt unter geeigneten Bedingungen ablaufen kann.

Die Verflüssigung bei Zugabe von C ist voraussichtlich darauf zurückzuführen, dass das Umsetzungsprodukt von deprotoniertem P mit C das der Base zugeordnete Kation bevorzugt solvatisieren kann.

Eine bevorzugte Variante verläuft so, dass man gemeinsam C und P schon zu Beginn dem Solvatisierungsmittel zufügt und damit in Gegenwart von C die Deprotonierung von P über Zugabe von B durchführt.

Durch diese Vorgehensweise kann oft Bildung eines Feststoffes während der Synthese verhindert werden, weil schon von Beginn an genügend Solvatisierungsstellen für das zugehörige Kation im Umsetzungsprodukt von P mit C zur Verfügung stehen.

In praxisgeeigneten Vorgehensweisen wird die Base oft in einem Lösemittel zugefügt. Das Hauptbeispiel ist dabei Natriummethylat zu 30 Gew.-% gelöst in Methanol oder auch metallisches Natrium in einem Kohlenwasserstoff, wie Petroläther als Schutzmittel gegen Angriff durch Spuren von Luftsauerstoff. Werden solche Löseoder Schutzmittel zum Eintrag der Basen mitverwendet, so werden sie während oder nach der erfolgten Neutralisationsreaktion unter Wärme- und Vakuumeinwirkung wieder entfernt.

Der Flüssiginitiator kann auch ein Umsetzungsprodukt sein, bei dem bis zu 50 % des Carbodiimids durch Isocyanat ersetzt worden sind. Eingesetzt werden können Monoisocyanate und Diisocyanate sowie Thioisocyanate, die eine aliphatische, cycloaliphatische, aromatische oder aliphatisch-aromatische Grundstruktur haben. Die aromatische Struktur kann halogeniert und alkyliert sein.

Beispiele für flüssige Isocyanate, sind Phenylisocyanat und substituierte Phenylisocyanate, Cyclohexylisocyanat, Toluylendiisocyanat, Hexamethylendiisocyanat, Isophorondiisocyanat, Diphenylmethandiisocyanate und Dicyclohexylmethandiisocyanat.

Die Flüssiginitiatoren werden zur Polymerisation von Lactam in kontinuierlichen und in diskontinuierlichen Verfahren eingesetzt.

Dabei hat es sich gezeigt, dass die Zeit bis zum beginnenden Viskositätsanstieg von frisch aktivierter Lactamschmelze LC stark abhängt von der Konzentration an Flüssiginitiator sowie der Temperatur der LC-Schmelze, sowie von der Art des gewählten Flüssiginitiators.

Standardmessmethode zum Vergleich des Polymerisationsverlaufes ist dabei die Zeit Tᵤ die vergeht bis ein Magnetrührstab in der frisch aktivierten Lactamschmelze stehen bleibt und wobei diese Zeit als Tᵤ bezeichnet wird.

Während man Lactam-12 bedingt durch seinen Schmelzpunkt, vorteilhafterweise bei einer Temperatur von mehr als 170 °C über Zugabe der Flüssiginitiatoren polymerisiert, lässt sich Lactam-6, bedingt durch seinen deutlich tieferen Schmelzpunkt, z.B. schon bei 80 °C mit Flüssiginitiator aktivieren und danach unter geeigneter Temperaturführung der Polymerisation unterziehen. Dabei gilt, daß sich bei Absenkung der Temperatur die Tᵤ-Zeit und damit der Polymerisationsablauf verlängert und bei Erhöhung der Schmelzetemperatur beschleunigt.

Erweist sich ein Flüssiginitiator bei den gewählten Bedingungen als schnell, so sollte für seine Einmischung in Lactam auf Verwendung eines Magnetrührstabes verzichtet werden, weil eine homogene Einmischung nicht mehr gewährleistet ist.

Die Tᵤ-Zeit ist bei Bedingungen bei denen Flüssiginitiatoren schnell sind nicht mehr genau bestimmbar, sondern die Zugabe muss von einem raschen und intensiv wirkenden Mischvorgang, der homogenes Einmischen gewährleistet, begleitet sein.

Geeignet sind damit bei Bedingungen bei denen die Initiatoren die Polymerisation rasch auslösen, Verfahren bei denen die Schmelze nach der Flüssiginitiator-Zugabe während längerer Zeit einer Zwangsmischung unterworfen ist wie z.B. der Polymerisation einer frisch aktivierten Schmelze in einem Doppelwellenextruder.

Bedingungen bei denen die Initiatoren schnell wirken, eignen sich somit für Verfahren bei denen eine Zwangsmischung und Förderung der Schmelze gewährleistet ist.

Wird dabei etwa auf einem Doppelwellenextruder kontinuierlich polymerisiert, so können bei geeignetem Aufbau des Extruders, mehrere Verfahrensschritte dirket hintereinandergeschaltet werden.

So erfolgt z.B. in einer ersten, definierten Zone die Polymerisation zum Polylactam, sodann kann in einem definierten anschliessenden Verfahrensschritt das schmelzeflüssige Polylactam direkt über Zugabe von Additiven im Sinne einer Endproduktformulierung modifiziert werden.

Die dabei getrennt oder gemeinsam zuzusetzenden Additive beinhalten die gesamte Auswahl der bekannten Polyamidzusätze, wie z.B. Stabilisatoren jeder Art, Glasfasern und Mineralien, Fremdpolymer, wie Schlagzähmittel, Antiflammmittel sowie Weichmacher, Verarbeitungshilfsmittel und Färbemittel, wie Russ, sowie beliebige Kombinationen dieser Zusätze.

Anschliessend kann die Schmelze kontinuierlich ausgetragen und granuliert oder auch, bei Wahl eines geeigneten Formgebungswerkzeugs, direkt zu einem Endprodukt, wie z.B. einem Rohr oder Profil, formgebend verarbeitet werden. Bedingungen bei denen ein rascher Lactamumsatz erfolgt eignen sich also überall dort, wo die aktivierte Lactamschmelze zunächst einer Zwangsmischung unterworfen ist.

Ein weiteres Beispiels für die Verwendung der erfindungsgemäßen Flüssiginitiatoren ist der Reaktionsspritzguss auf einer Spritzgiessmaschine mit Aufschmelzextruder, wobei z.B. über den Flüssiginitiator-Anteil, die Temperaturführung und die Verweilzeit der Polymerisationsverlauf gesteuert werden kann. Bei geeigneter Wahl der Komponente P im Flüssiginitiator entformen dabei die Teile spontan und sind stabilisiert gegen Abbau (Hitze, Bewitterung und Oxidation).

Bei Temperaturerhöhung der Lactamschmelze, z.B. von 200 °C auf 250 °C und darüber hinaus, werden relativ langsame Initiatoren ebenfalls schneller und eignen sich damit praktisch gleichwertig gut für die kontinuierliche Polymerisation, z.B. auf einem Extruder.

Langsame Flüssiginitiatoren sind insbesondere für kontinuierliche Prozesse geeeignet bei denen während des Zeitintervalls der tiefen Viskosität der aktivierten Lactamschmelze spezielle Verfahrensschritte ablaufen müssen, wie z.B. die Imprägnation von parallel angeordneten Rovings, auch in Kombination mit Geweben (oder als allgemeinem Ausdruck Filamentstrukturen), wobei auch Füllstoffe anwesend sein können in sogenannten Pultrusionsprozessen. Der grosse Vorteil ist dabei, dass die frisch aktivierte Lactamschmelze während eines definierten Zeitintervalles dünnflüssig und benetzungsaktiv ist und damit Filamentstrukturen sehr gut durchdringen und benetzen kann, wonach bei geeigneter Wahl der Komponente P die Matrix ein bevorzugtes Verhalten zeigt, indem z.B. das Fertigteil spontan entformt sowie auch gegen Hitze- und Bewitterungsabbau geschützt ist.

Mit sogenannt langsamen Flüssiginitiator kontinuierlich aktivierte Lactamschmelze kann natürlich auch in kontinuierlichen Spritz-, Tauch- und Ummantelungsprozessen verarbeitet werden, wobei wieder über spezielle Wahl der Komponente, P, der Flüssiginitiator gezielt an die Bedürfnisse des jeweiligen Verarbeitungsprozesses angepasst werden kann.

Sogenannt langsame Flüssiginitiatoren sind insbesondere für diskontinuierliche Prozesse hervorragend geeignet, wo eine Phase tiefer Viskosität für den Formgebungsschritt notwendig ist.

Dabei kann der Flüssiginitiator z.B. mittels eines Mischaggregats während eines definierten Zeitintervalls direkt in einen Lactamschmelzstrom, der während eines definierten Zeitintervalls strömt, eindosiert werden, wonach der aktivierte Schmelzestrom für den vorgesehenen Prozess, z.B. die Benetzung und vollständige Durchdringung von Filamentanordnungen in einem Resin-Transfer-Molding Verfahren direkt verwendet wird.

Man kann natürlich auch portionierte Lactamschmelzemassen über rasches Einmischen mit langsamen Flüssigkatalysatoren aktivieren und nachfolgend z.B. im Monomerguss, im Reaktivspritzguss, im Rotationsguss im Schleuderguss und weiteren Taktverfahren verarbeiten, wobei vielfältige Variationsmöglichkeiten gegeben sind indem z.B. gleichzeitig zum Initiator Zusätze eingemischt werden können und auch die Form Beschichtungen, Zusätze oder zu umhüllende Komponenten, z.B. eingelegt, enthalten kann.

All diesen Variationsmöglichkeiten kommt es zugute, dass die Schmelze zunächst während einer definierten Zeit äusserst dünnflüssig ist.

Eine grosse Praxiseignung für viele Prozesse ergibt sich ferner über die Möglichkeit zur Anpassung der Komponente P der Flüssiginitiatoren an das gewählte Verfahren und die Produkteigenschaften.

Besonders bevorzugt für die Durchführung der dargelegten Verfahren ist Lactam-12 weil es in einem breiten Temperaturbereich von z.B. 170-320 °C vollständig zu Polylactam umgesetzt werden kann und sich danach auch kein Lactam rückbildet.

Wie bei der anionischen Lactampolymerisation üblich und dem Fachmann bekannt ist bei der Durchführung der Verfahren von trockener Lactamschmelze auszugehen und unter trockenem Intertgas zu arbeiten.

Dies gilt insbesondere dann, wenn die Schmelze intensiv mit einer gasförmigen Phase in Berührung tritt wie z.B. bei Tauch-, Spritz- und Ummantelungsprozessen.

Ein wesentlicher Vorteil bei all diesen Verfahren ist es ferner, dass der erfindungsgemässe Flüssiginitiator bei Kontakt mit Lactamschmelze die Polymerisation sofort starten kann und nicht erst Schmelzeströme enthaltend Katalysator und Aktivator intensiv gemischt werden müssen damit ein gleichmässiger Polymerisationsverlauf einsetzen kann.

Wie bereits aus der Verfahrensbeschreibung mit den vielfältigen Variationsmöglichkeiten hervorgeht, können auf Basis der erfindungsgemässen Flüssiginitiatoren und Anwendung kontinuierlicher sowie diskontinuierlicher Verfahren eine Vielzahl von Gebrauchsgegenständen hergestellt werden wie:

Rohre, Profile, Ummantelungen, Beschichtungen, Spritzgussteile, Hohlkörper, Gussteile, Verbundwerkstoffteile mit kontinuierlicher und diskontinuierlicher Strukturausprägung sowie Granulate, die wieder aufgeschmolzen und in üblichen Thermoplastprozesssen weiterverarbeitet werden können. Dabei lassen sich im Pultrusionsverfahren direkt Profile oder auch langfasersverstärkte Granulate herstellen, die in einem Folgeschritt, bevorzugt nach dem Spritzgiessverfahren, zu Gebrauchsgegenständen umgeformt werden können und die Fasern bevorzugt Galsfasern oder C-Fasern sind.

Die Erfindung betrifft weiterhin ein Polymergranulat das unter Einsatz des Flüssiginitiators wie vorstehend beschrieben, hergestellt worden ist (Patentansprüche 24 bis 28). Das erfindungsgemäße Polymergranulat zeichnet sich besonders dadurch aus, daß es über eine sehr lange Zeitspanne lagerfähig ist. Das Polyergranulat kann dann anschließend durch Aufschmelzen mit entsprechenden Formgebungswerkzeugen zu Produkten wie vorstehend bereits beschrieben, weiterverarbeitet werden. Das Polymergranulat nach der Erfindung wird bevorzugt aus Lactam-6 und/oder Lactam-12 erhalten. Beim Polymergranulat nach der Erfindung kann der Flüssiginitiator in einer Konzentration von 0,3-10 Gew.-%, bevorzugt 0,5-3,0 Gew.-% eingesetzt werden.

Bei der Herstellung des Polymergranulates ist besonders die Variante bevorzugt, bei der die Polymerisation in einem Doppelwellenextruder vorgenommen wird.

Die Erfindung soll nun anhand von Beispielen näher erläutert werden.

### Beispiele

Den Beispielen voran geht eine Tabelle mit den verwendeten Abkürzungen, welche ergänzend die Molekulargewichte oder bei bifunktionellen protischen Verbindungen das Äquivalentgewicht enthält.

Die Beispiele sind anschliessend in Tabellenform zusammengefasst, wobei jeweils das Vorgehen bei einer Serie gleichartiger Versuche genauer beschrieben ist und jeweils Teil a) die stöchiometrische Zusammensetzung des Flüssiginitiators und Teil b) die Polymerisationbedingungen und die Analysenergebnisse von Polymerisationsversuchen zusammenfasst.

In den Beispielen bedeutet
bei den Solvatisierungsmittel, S:

| Abkürzung | Substanz | Äquivalentgewicht |
|---|---|---|
| NMP | N-Methylpyrrolidon | 99 |
| NOP | N-Octylpyrrolidon | 197 |
| DMEU | Dimethylethylenharnstoff | 114 |
| DMPU | Dimethylpropylenharnstoff | 128 |

bei den Carbodiimiden, C:

| Abkürzung | Substanz | Äquivalentgewicht |
|---|---|---|
| DCC | Dicyclohexylcarbodiimid aliphatisches Carbodiimid | 206 |
| S7000 | Bis-(2,6-diisopropylphenyl) carbodiimid | 362,5 |

bei den protischen Verbindungen, P:

| Abkürzungen | Substanz | Äquivalentgewicht |
|---|---|---|
| MeOH | Methylalkohol | 32 |
| Ny | Nylostab S-EED* | 221 |
| I 245 | Irganox 245** | 294 |
| T 312 | Tinuvin 312** | 312 |
| T571 | Tinuvin 571** | 394 |
| I 5057 | Irganox 5057** | 393 |
| Amid 23 | lineares Carbonsäureamid aus Isotridecylamin und Essigsäure | 241 |

| | | |
|---|---|---|
| * Handelsprodukt der Firma CLARIANT, Basel | | |
| ** Handelsprodukt der Firma CIBA SC, Basel | | |

bei den Basen, B:

| Abkürzung | Substanz | Äquivalentgewicht |
|---|---|---|
| NaOMe | beispielhaft ist Natriummethylat als ca. 30 %ige Lösung in Methanol oder als Feststoff angewendet | 54 |

In den Tabellen a) bedeuten
1 das Carbodiimid C
2 die protische Verbindung P wobei zu berücksichtigen ist, dass in einem Beispiel oft mehrere protische Verbindungen gleichzeitig verwendet wurden
3 die Base, B, welche in bevorzugten Fällen (Bsp. Na.Ome, Na.Oet) auch direkt als protische Verbindung dienen kann
4 das Solvatisierungsmittel, S, wobei auch hier mehrere Solvatisierungsmittel gleichzeitig verwendet werden können
5 das Äquivalentverhältnis der verwendeten Komponenten. Sind gleichzeitig mehrere protische Verbindungen bzw. S-Mittel verwendet, so sind ihre Äquivalentanteile untereinander aufgeführt
6 je den Feststoffanteil des Ansatzes bestehend aus dem Umsetzungsprodukt
7 die Konzentration der aktiven Komponente des Flüssiginitiators, je berechnet als Äquivalent pro kg der gesamten Flüssiginitiator-Rezeptur

In Tabelle b) welche Polymerisationsversuche beinhaltet, bedeuten:
8 den der Lactamschmelze zugefügten Gewichtsanteil an Flüssiginitiator
9 die Anzahl Lactammoleküle pro aktives Flüssiginitiator-Teilchen
10 die Temperatur der Lactamschmelze während des Polymerisationsverlaufs in °C
11 die gewählte Polymerisationszeit in Min
12 die gewählte Lactammenge in g
13 die Zeit Tᵤ nach der ein die Schmelze kontinuierlich mischender Magnetrührer üblicher Bauart, zufolge der ansteigenden Viskosität der polymerisierenden Schmelze stehen bleibt in Sek.
14 die relative Lösungsviskosität des Polymerisats
15 das Schmelzpunktmaximum des Polymerisates aus der DSC-Messkurve in °C
16 der Methanolextraktanteil des Produktes bestehend aus nicht umgesetztem Lactam sowie Solvatisierungsmittel und freigesetzter protischer Verbindung.

### Versuche 1 bis 7 (Tabelle 1a und 1b)

Bei den Beispielen 1 bis 7 wurde ein Flüssiginitiator verwendet, der DCC als Verbindung C enthielt. Ergänzend ist meist Nylostab S-EED das protische Mittel P, das zum Teil ergänzend mit einem linearen Carbonsäureamid eingesetzt ist, wobei P je im Unterschuss bezogen auf B, die Base vorliegt, so dass direkt ein Teil des Methylats als protisches Mittel P wirken kann.

Zur Herstellung wurde so vorgegangen, dass man unter Intertgas und Feuchteausschluss das Solvatisierungs-mittel S vorlegt, die Komponenten P darin löst und sodann unter Wärme- und Vakuumeinwirkung bei 80-100 °C die Base B (als 30 %ige methanolische Lösung von NaOMe) langsam zutropft, und den Methanol (Lösemittelanteil und Neutralisationsprodukt) kontinuierlich entfernt und danach das DCC zufügt, danach die Raktionsmischung solange erwärmt bis eine klare Lösung vorliegt und sodann auf Raumtemperatur abkühlt. Danach wird der lagerstabile Flüssiginitiator einem Polymerisationstest entsprechend Tabelle 1b) unterworfen.

Es entstehen Polymerisate, die sich beim Erstarren spontan von der Glaswand lösen und eine Polylactammatrix darstellen, welche direkt stabilisiert ist gegen Hitze- und Bewitterungsabbau.

Obwohl jeder Flüssiginitiator bereits Bestandteile enthält, welche im Polymerisat Zusatzaufgaben übernehmen, wurde er nur in einer Konzentration von 2,7-3,85 Gew.-% angewendet um Polylactam mit einem mittleren Polymerisationsgrad von 200 (Zahlenmittel) herzustellen.

Die Polymerisate besitzen je den erwarteten Wert der rel. Lösungsviskosität, besitzen einen hohen Schmelzpunkt und tiefen Extraktanteil und sind von heller Farbe.

### Versuche 8 bis 14 (Tabellen 2a und 2b)

Die Versuche 8 bis 14 sind in den Tabellen 2a und 2b zusammengefasst. Die protische Verbindung P ist dabei je im molaren Überschuss bezogen auf das Carbodiimid C und zum Teil auch auf die Base B eingesetzt, so dass sich ihr deprotonierter Hauptanteil mit dem Carbodiimid umsetzen kann.

In allen Fällen stellen protische Polyamidstabilisatoren (Hitze- und Bewitterungsabbau) oder Verarbeitungshilfsmittel einen wesentlichen Anteil von P dar, und ein verbleibender Anteil besteht je aus Lactam-6.

Für die Herstellung wurden wieder die Komponenten P in S gelöst und sodann bei 80-100 °C und Vakuumeinwirkung das Neutralisationsmittel, NaOMe (zu ca. 30 % gelöst in Methanol), zugetropft und dadurch kontinuierlich Methanol (Lösemittel für die Base und Neutralisationsprodukt) abgezogen. Nach erfolgter Deprotonierung von P wurde bei 80-100 °C das Carbodiimid zugefügt und so lange bei 80-100 °C gerührt bis eine klare Lösung vorlag, sodann auf Raumtemperatur abgekühlt und der bereitgestellte Flüssiginitiator gemäss Tabelle 2b für die Polymerisation von Lactam-12 eingesetzt.

Wie die Analyseergebnisse zeigen, wird die Polymerisation je langsam ausgelöst und führt zu Polymerisat von hoher Viskosität, wobei die Schmelzpunkte je über 170 °C und die Gesamtextraktwerte je unterhalb von 6 Gew.-% lagen.

Bei Polymerisat 11, mitenthaltend Verarbeitungshilfsmittel als protische Verbindung, erfolgt spontanes Entformen des Polymerisates nach Abkühlung.

Bei den Flüssiginitiatoren gemäss Tabelle 2 muss zur Erzielung eines Polymerisationsgrades von 200 (Zahlenmittel) je ein Gewichtsanteil von ca. 3-4 % verwendet werden, weil die mitverwendeten Stabilisatoren zweckes Verhinderung von Flüchtigkeit je Molekulargewichte von mehr als 300 besitzen.

### Versuche 15 bis 21 (Tabelle 3a und 3b)

In Tabelle 3a und 3b sind Versuche mit aromatischem Carbodiimid zusammengefasst. Die ausgewählten Versuche zeigen die breite Variationsmöglichkeit der Erfindung in dem
- bei Versuch 15 bis 18 die Base vollständig die protische Verbindung darstellt, sich
- bei Versuch 19 die protische Verbindung je zu ca. 50 % von Methanol und von Lactam-6 ableitet, sowie
- bei Versuch 20 und 21 zu 50 % aus Stabilisator und Methanol besteht.

Um die Variationsbreite der Herstellmöglichkeit darzustellen, wurden zur FI-Herstellung zusätzlich verschiedene Synthesewege beschritten. Dabei entsprechen Versuch 15-17 derselben Rezeptur, und bei Versuch 18 ist lediglich der Solvatisierungsmittelanteil erhöht. Dabei wurden:
- Bei Versuch 15 das NaOMe als 30 %ige Lösung bei 80 °C in S eingetragen und der Methanol über Wärme- undVakuumeinwirkung vollständig entfernt, wonach man das Carbodiimid zufügte und bei 80-100 °C während 30 Minutern mit dem NaOMe umsetzte und danach abkühlte
- Bei Versuch 16 und 17 das Carbodiimid bei Raumtemperatur in S gelöst, dsodann erwärmt und danach das NaOMe als methanolische Lösung unter gleichzeitiger Vakuumeinwirkung langsam zugetropft, wobei bei Versuch 16 die Temperatur der Lösung bei 90-95 °C und bei Versuch 17 bei 110-120 °C lag und diese Temperatur je ca. 70 Minuten aufrechterhalten wurde.
- Bei Versuch 15 und 16 schloss sich eine Nachbehandlung zwecks vollständiger Entfernung von Restmethanol über Vakuumeinwirkung bei 120 °C während 100 Minuten und einem Vakuum von 50 Torr an. Weil bei Versuch 15, 16 und 17 ein Niederschlagsanteil verblieb, wurde bei Versuch 18 der S-Anteil von 6 auf 8 Solvatisierungsmoleküle pro C erhöht und bei der Herstellung entsprechend Versuch 17 verfahren, wonach ein Produkt ohne Feststoffanteil resultierte.
- Bei Versuch 19 und 20, wo Lactam 6 bzw. Nylostab S-EED als spezielles P mitverwendet ist, wurde je das P in S gelöst, sodann bei ca. 100 °C und Vakuumeinwirkung und langsamer Temperaturerhöhung bis 130 °C während ca. 80 Minuten Restmethanol entfernt, danach die Wärmezufuhr unterbrochen und bei ca. 90 °C das C zugefügt und nachfolgend innerhalb von ca. 1 h auf Raumtemperatur abgekühlt Diese Produkte zeigen keinen Niederschlagsanteil.
- Bei Versuch 21 wurde wieder so verfahren, dass man P und C gemeinsam in S löste, auf ca. 95 °C erwärmte, und sodann unter Vakuum- und Wärmeeinwirkung das in Methanol gelöste NaOMe zufügte und das Vakuum noch während 50 Minuten bei 95 °C aufrechterhielt und sodann abkühlte. Der resultierende FI ist von sehr heller Eigenfarbe und weist noch einen Restmethanolanteil auf, der den Polymerisaationsverlauf etwas verzögert.

Alle auf Stabilisator 7000 basierten Flüssiginitiatoren weisen relativ lange Tᵤ-Zeigen auf und sind damit speziell geeignet für Verfahren, wo die frisch aktivierte Lactamschmelze spezielle Verfahrensschritte durchlaufen muss, wie z.B. die Herstellung von Faserverbundwerkstoffen, wobei eine vollständige Imprägnierung der Faserstrukturen ideal gewährleistet ist.

### Versuch 22

Ergänzend wurde geprüft, ob sich im erfindungsgemässen FI ein Teil des Carbodiimids C durch Isocyanat I ersetzen lässt.

Dazu wurde in einem Reaktionsansatz von 30 g Feststoffanteil Phenylisocyanat, PI, mit DCC im Molverhältnis von 40:60 eingesetzt, als protisches Mittel, P, Nylostab S-EED zu 0,8 mitverwendet und mit 1,02 NaOMe (je Äquivalentteile bezogen auf PI + DCC), umgesetzt, wobei die Reaktion im S-Mittel entsprechend 4 DMPU und 3 NMP (je Molteile bezogen auf die Summe PI + DCC) durchgeführt wurde.

Dazu löste man Ny in S, erwärmte auf 100 °C fügte danach NaOMe als 30 %ige Lösung in MeOH zu und danach tropfenweise das PI. Nachfolgend wurde während 30 Min. bei 100 °C Vakuum angelegt, sodann bei 100 °C das DCC zugefügt, während weiteren 10 Min. bei 100 °C belassen und danach abgekühlt.

Es resultierte ein FI ohne Feststoffanteil, der im Polymerisationstest unter Bedingungen wie in Tabelle 1b beschrieben , eine Zeit Tᵤ von 25 Sek. bewirkte, und zu Polylactam-12 mit einem SMP von 177,2°C bei einer Lösungsvisosität von 1,865 führte.

Ergänzend wurden mit den beschriebenen Flüssiginitatoren viele Anwendungsversuche durchgeführt.

Dabei zeigte sich als allgemeine Regel, dass sich bei Lactam 12 die Polymerisation durch Temperaturerhöhung stark beschleunigen lässt.

Setzt man dabei den jeweiligen FI so ein, dass eine Anwendungskozentration von 0.5 Äquiv.-%, bezogen auf Lactam-12, vorliegt (1 FI-Teilchen auf 200 Lactammoleküle), so genügt bei 250 °C eine Zeit von ca. 5 Minuten und bei 300 °C von lediglich ca. 1 Minute für den weitgehenden Umsatz des Lactams zum Polylactam (Restlactamgehalt 0,5-1,0 Gew.-%). Wird diese Temperatur länger aufrecht erhalten , so kommt es, insbesondere bei hohen Temperaturen, zu Nebenreaktionen, wobei die aus der Literatur bekannten Vernetzungsstrukturen dominant werden können, wodurch einerseits die Festigkeit und Zähigkeit ansteigt, andererseits die Weiterverarbeitbarkeit erschwert wird.

Zusätzlich wurde auch Lactam-6 mit FI gemäss Versuch 9, 22 und 29 und einer Zugabemenge an FI entsprechend 0,5 Äquiv.-% bezogen auf Lactam-6 zum Polylactam umgesetzt.

Das Lactam wurde dazu sorgfältig getrocknet. Die Polymerisation erfolgte identisch zu den Bedingungen bei Lactam-12, d.h. während 30 Minutern bei 200 °C. Die Produkte besitzen je einen Restlactamgehalt von ca. 10 Gew.-% und ein SMP-Maximum im DSC von ca. 215 °C und zeigen spontanes Ablösen von der Gefässwand.

## Patentansprüche

1. Flüssiginitiator für die Durchführung der anionischen Lactampolymerisation,
**dadurch gekennzeichnet,**
**daß** er ein Umsetzungsprodukt von Carbodiimid C mit einer protischen Verbindung P und einer Base B in einem aprotischen Solvatisierungsmittel S enthält.

2. Flüssiginitiator nach Anspruch 1, **dadurch gekennzeichnet, daß** das Carbodiimid C eine aliphatische, cycloaliphatische, aromatische oder aliphatisch-aromatische Grundstruktur besitzt.

3. Flüssiginitiator nach Anspruch 2, **dadurch gekennzeichnet, daß** C ausgewählt ist aus N,N'-Diisopropylcarbodiimid, N,N'Di-(o-tolyl)-carbodiimid, N,N'-Dicyclohexylcarbodiimid, 2,2'6,6'-Tetraisoprophylphenylcarbodiimid und Poly-(2,2-diisopropyl)-p-phenylencarbodiimid.

4. Flüssiginitiator nach mindestens einem der Ansprüche 1 bis 3, **dadurch gekennzeichnet, dass** er ein Umsetzungsprodukt enthält bei dem das Carbodiimid durch 1-50 Äquivalentprozent Isocyanat ersetzt worden ist.

5. Flüssiginitiator nach mindestens einem der Ansprüche 1 bis 3, **dadurch gekennzeichnet, daß** die protische Verbindung P einen pk_{A} > 13 aufweist.

6. Flüssiginitiator nach Anspruch 5, **dadurch gekennzeichnet, daß** die protonische Verbindung P ausgewählt ist aus Alkoholen mit 1-12 C-Atomen, insbesondere 1-6 C-Atomen, Carbonsäureamiden, Aminen und/oder sterisch gehinderten aliphatischen Aminen.

7. Flüssiginitiator nach Anspruch 6, **dadurch gekennzeichnet, daß** die Carbonsäureamide aus linearen und/oder cyclischen Monomeren mit 2-20 C-Atomen aufgebaut sind.

8. Flüssiginitiator nach Anspruch 7, **dadurch gekennzeichnet, daß** das Carbonsäureamid zusätzlich Strukturelemente hat, die eine sterisch gehinderte protische Gruppe aufweisen.

9. Flüssiginitiator nach Anspruch 6, **dadurch gekennzeichnet, daß** die Amine substituierte aromatische Amine sind.

10. Flüssiginitiator nach mindestens einem der Ansprüche 1 bis 9, **dadurch gekennzeichnet, daß** das Kation der Base B ein Alkali- oder Erdalkaliion oder Tetraalkylammonium ist und die Base ausgewählt ist aus Alkoholat, Amid, Hydrid oder Alkylanion.

11. Flüssiginitiator nach Anspruch 10, **dadurch gekennzeichnet, daß** die Base B eine Alkali- oder Erdalkalialkoholat ist.

12. Flüssiginitiator nach mindestens einem der Ansprüche 1 bis 11, **dadurch gekennzeichnet, daß** das Solvatisierungsmittel S eine aliphatische, cycloaliphatische oder aromatische organische Verbindung ist, die solvatisierende Strukturelemente besitzt, die keine aziden H-Atome aufweisen.

13. Flüssiginitiator nach Anspruch 12, **dadurch gekennzeichnet, daß** S eine polare aprotische Verbindung ausgewählt aus der Gruppe veretherte Polyglykole, flüssige Phthalsäureester, N-alkylierte Harnstoff-Verbindungen, N-alkylierte Carbonsäureamide oder deren Gemische ist.

14. Flüssiginitiator nach Anspruch 13, **dadurch gekennzeichnet, daß** die Harnstoffverbindung ein Tetraalkylharnstoff mit 1-20 C-Atomen ist, insbesondere ausgewählt aus der Gruppe Tetramethylharnstoff, Tetraethylharnstoff, Tetrabutylharnstoff oder eine cyclische Struktur gemäß der allgemeinen Formel I 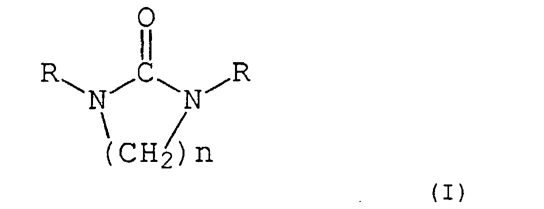 in welcher R ein Alkylrest mit 1-5 C-Atomen, insbesondere ein Methylrest und wobei n 2 oder 3 ist.

15. Flüssiginitiator nach Anspruch 13, **dadurch gekennzeichnet, daß** S ein cyclisches 5-7 gliedriges N-alkyliertes Carbonsäureamid ist und der Alkyrest 1-12 C-Atome besitzt, wobei auch Heteroatome enthalten sein können.

16. Flüssiginitiator nach Anspruch 13, **dadurch gekennzeichnet, daß** S N-Methylpyrrolidon, N-Octylpyrrolidon, N-Cyclohexylpyrrolidon, N-Octylcaprolactam oder ein Gemisch hiervon ist.

17. Flüssiginitiator nach mindestens einem der Ansprüche 1 bis 16, **dadurch gekennzeichnet, daß** er zusätzlich herstellungs- und/oder verwendungsbedinge Zusätze enthält.

18. Flüssiginitiator nach mindestens einem der Ansprüche 1 bis 17, **dadurch gekennzeichnet, daß** das Umsetzungsprodukt erhalten worden ist mit der Maßgabe, daß B:P:C im Verhältnis von 0,2-1,1:0,2-4:1 eingesetzt worden sind.

19. Flüssiginitiator nach Anspruch 18, **dadurch gekennzeichnet, daß** das Molverhältnis B:P:C 0,8-1,1:0,8-1,2:1 ist.

20. Verfahren zur Herstellung eines Flüssiginitiators nach mindestens einem der Ansprüche 1 bis 19, **dadurch gekennzeichnet, daß** das Umsetzungsprodukt im Solvatisierungsmittel S unter Inertgasführung und Feuchtigkeitsausschluß im Bereich von Raumtemperatur bis 140 °C hergestellt wird, wobei niedermolekulare Lösemittel für die Base und Neutralisationsprodukte der Base, insbesondere niedermolekulare Alkohole entfernt werden.

21. Verfahren nach Anspruch 20, **dadurch gekennzeichnet, daß** in einem vorgelagerten Schritt die Verbindung P mit der Base B umgesetzt wird, so daß P in basischer Form vorliegt und daß dann die deprotonisierte Verbindung P mit dem Carbodiimid umgesetzt wird und die Umsetzung im Solvatisierungsmittel erfolgt.

22. Verfahren nach Anspruch 20 oder 21, **dadurch gekennzeichnet, daß** man getrennt in einem Anteil Solvatisierungsmittel S P löst und P über Basezugabe B in die anionische Salzform überführt und flüchtige Reaktionsprodukte sowie die Polymerisation behindernde Löse- und Schutzmittelreste entfernt und daß man danach das Carbodiimid im Solvatisierungsmittel S und die deprotonosierte Verbindung P im Solvatisierungsmittel S zusammenfügt und zum Flüssiginitiator umsetzt.

23. Verfahren nach Anspruch 20 oder 21, **dadurch gekennzeichnet, daß** gleichzeitig C und P in S gelöst und anschließend B zugefügt wird, wonach die Base in der protonierten Form entfernt wird.

24. Polymergranulat herstellbar durch kontinuierliche oder diskontinuierliche anionische Polymerisation von Lactam mit einem Flüssiginitiator nach mindestens einem der Ansprüche 1 bis 19.

25. Polymergranulat nach Anspruch 24, **dadurch gekennzeichnet, daß** als Lactam Lactam-6 und/oder Lactam-12 verwendet wird.

26. Polymergranulat nach Anspruch 24 oder 25, **dadurch gekennzeichnet, daß** der Lactamschmelze der Flüssiginitiator in einer Konzentration von 0,3-10 Gew.-% zugefügt wird.

27. Flüssiginitiator nach Anspruch 26, **dadurch gekennzeichnet, daß** eine Konzentration von 0,5-3 Gew.-% eingestellt wird.

28. Polymergranulat nach mindestens einem der Ansprüche 24 bis 27, **dadurch gekennzeichnet, daß** das Polymergranulat kontinuierlich auf einem Doppelwellenextruder hergestellt wird.

29. Verwendung des Flüssiginitiators nach einem der Ansprüche 1 oder 9, zur direkten Herstellung von Gebrauchsgegenständen aus Polylactam in einem diskontinuierlichen oder kontinuierlichen Prozess der Art Monomerguss, Extrusion, Spritz-, Schleuder- und Rotationsguss, Pultrusions-, Tauch- und Spritzverfahren, wobei der Flüssiginitiator jeweils der Lactamschmelze zugefügt wird.

## Claims

1. Liquid initiator for carrying out anionic lactam polymerisation, **characterised in that** it comprises a conversion product of carbodiimide C with a protic compound P and a base B in an aprotic solvation means S.

2. Liquid initiator according to Claim 1, **characterised in that** the carbodiimide C comprises an aliphatic, cyclo-aliphatic, aromatic or aliphatic-aromatic base structure.

3. Liquid initiator according to Claim 2, **characterised in that** C is selected from N,N'-diisopropylcarbodiimide, N,N'Di-(o-tolyl)-carbodiimide, N,N'-dicyclohexylcarbodiimide, 2,6' tetra-isoprophylphenylcarbodiimide and poly- (2,2-diisopropyl)-p-phenylencarbodiimide.

4. Liquid initiator according to at least one of Claims 1 to 3, **characterised in that** it comprises a conversion product in which carbodiimide has been replaced by 1-50 equivalent percent isocyanate.

5. Liquid initiator according to at least one of Claims 1 to 3, **characterised in that** the protic compound P has a pk_{A} > 13.

6. Liquid initiator according to Claim 5, **characterised in that** the protonic compound P is selected from alcohols with 1-12 C-atoms, in particular 1-6 C-atoms, carboxylic acid amides, amines and/or sterically inhibited aliphatic amines.

7. Liquid initiator according to Claim 6, **characaterised in that** the carboxylic acid amides are based on linear and/or cyclic monomeres with 2-20 C-atoms.

8. Liquid initiator according to Claim 7, **characterised in that** the carboxylic amide additionally comprises structural elements with a sterically inhibited protic group.

9. Liquid initiator according to Claim 6, **characterised in that** the amines are substituted aromatic amines.

10. Liquid initiator according to at least one of Claims 1 to 9, **characterised in that** the cation of base B is an alkali ion or earthalkali ion or tetraalkyl ammonium and the base is selected from alkoholate, amide, hydride or alkyl anion.

11. Liquid initiator according to Claim 10, **characterised in that** that base B is an alkali- or earthalkali-alcoholate.

12. Liquid initiator according to at least one of Claims 1 to 11, **characterised in that** solvation means S is an aliphatic, cyclo-aliphatic or aromatic organic compound with solvating structure elements which do not include azide H-atoms.

13. Liquid initiator according to Claim 12, **characterised in that** S is a polar aprotic compound selected from the group of ethered polyglycoles, liquid phthalic acid ester, N-alkylised urea compounds, N-alkylised carbolicacid amides or their mixture.

14. Liquid initiator according to Claim 13, **characterised in that** the urea compound is a tetraalkyl urea with 1-20 C-atoms, in particular selected from the group tetramethyl urea, tetraethyl urea, tetrabutyl urea or a cyclic structure according to the general Formula I: 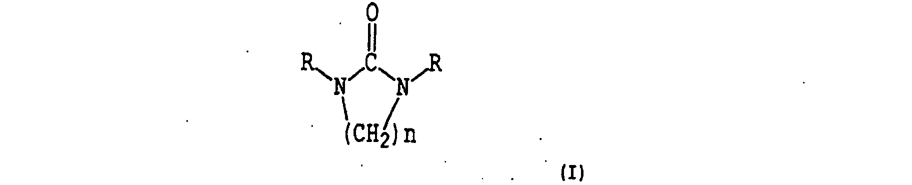 where R is an alkyl residue with 1-5 C-atoms, in particular a methyl residue, and where n equals 2 or 3.

15. Liquid initiator according to Claim 13, **characterised in that** S is a cyclic 5-7 segment N-alkylated carboxylic amide, and the alkyl residue has 1-12 C-atoms, and hetero atoms can be included.

16. Liquid initiator according to Claim 13, **characterised in that** S is an N-methylpyrrolidone, N-octylporrolidone, N-cyclohexylpyrollidone, N-actylcaprolactam or a mixture thereof.

17. Liquid initiator according to at least one of Claims 1 to 16, **characterised in that** it additionally contains manufacturing and/or application dependent additives.

18. Liquid initiator according to at least one of Claims 1 to 17, **characterised in that** the conversion product has been obtained by using B:P:C at a ratio of 0.2-1.1:0.2-4:1.

19. Liquid initiator according to Claim 18, **characterised in that** the mol ratio B:P:C is 0-8-1.1:0.8-1,2:1.

20. Method of producing a liquid initiator according to at least one of Claims 1 to 19, **characterised in that** the conversion product in solvation means S is produced under inert gas ducting and humidity exclusion in the range of room temperature up to 140°C, and low molecular solvents for the base and neutralisation products of the base, in particular low molecular alcohols, are removed.

21. Method according to Claim 20, **characterised in that** in a leading step, compound P is converted with base B, so that P is present in basic form, and deprotonised compound P is converted with carbodiimide, and the conversion is carried out in the solvation means.

22. Method according to Claim 20 or 21, **characterised in that** separately P is dissolved in a proportion of solvation means S, and P is transferred via base addition B in anionic salt form, and volatile reaction products as well as polymerisation inhibiting solvent and protective means residues are removed, and thereafter the carbodiimide in solvation means S and deprotonised compound P in solvation means S are joined and converted towards liquid initiator.

23. Method according to Claim 20 or 21, **characterised in that** C and P are simultaneously resolved in S and B is subsequently added whereafter the base is removed in the protonised form.

24. Polymer granulate produced by continuous or discontinuous anionic polymerisation of Lactam with a liquid initiator according to at least one of Claims 1 to 19.

25. Polymer granulate according to Claim 24, **characterised in that** Lactam-6 and/or Lactom-12 will be used as Lactam.

26. Polymer granulate according to Claim 24 or 25, **characterised in that** the liquid initiator will be added to the Lactam melt at a concentration of between 0.3 and 10 weight-%.

27. Liquid initiator according to Claim 26, **characterised in that** a concentration of between 0.5 and 3 weight-% will be set.

28. Polymer granulate according to at least one of Claims 24 to 27, **characterised in that** the polymer granulate will be produced continuously on a double shaft extruder.

29. Use of the liquid initiator according to one of Claims 1 - 9 for direct production of utility items of polylactam in a discontinuous or continuous process of the type monomer casting, extrusion, injection, centrifugal and rotation casting, pultrusion, immersion and injection process, and the liquid initiator is respectively added to the Lactam melt.

## Revendications

1. Initiateur liquide pour effectuer la polymérisation anionique de lactame, **caractérisé en ce qu'**il contient un produit de réaction de carbodiimide C avec un composé protique P et une base B, dans un agent de solvatation aprotique S.

2. Initiateur liquide selon la revendication 1, **caractérisé en ce que** le carbodiimide C a une structure de base aliphatique, cycloaliphatique, aromatique ou aliphatique-aromatique.

3. Initiateur liquide selon la revendication 2, **caractérisé en ce que** C est choisi parmi le N,N'-diisopropylcarbodiimide, le N,N'-di-(o-tolyl)carbodiimide, le N,N'-dicyclohexylcarbodiimide, le 2,2',6,6'-tétra-isopropylphénylcarbodiimide et le poly-(2,2-diisopropyl)-p-phénylènecarbodiimide.

4. Initiateur liquide selon au moins l'une des revendications 1 à 3, **caractérisé en ce qu'**il contient un produit de réaction dans lequel le carbodiimide a été remplacé par 1-50 % en poids d'équivalents isocyanate.

5. Initiateur liquide selon au moins l'une des revendications 1 à 3, **caractérisé en ce que** le composé protique P présente un pk_{A} > 13.

6. Initiateur liquide selon la revendication 5, **caractérisé en ce que** le composé protonique P est choisi parmi des alcools ayant de 1 à 12 atomes de carbone, en particulier de 1 à 6 atomes de carbone, des carboxamides, des amines et/ou des amines aliphatiques stériquement encombrées.

7. Initiateur liquide selon la revendication 6, **caractérisé en ce que** les carboxamides sont constitués de monomères linéaires si/ou cycliques ayant de 2 à 20 atomes de carbone.

8. Initiateur liquide selon la revendication 7, **caractérisé en ce que** le carboxamide comporte en outre des éléments structuraux qui présentent un groupe protique stériquement encombré.

9. Initiateur liquide selon la revendication 6, **caractérisé en ce que** les amines sont des amines aromatiques substituées.

10. Initiateur liquide selon au moins l'une des revendications 1 à 9, **caractérisé en ce que** le cation de la base B est un ion alcalin ou alcalino-terreux ou tétraalkylammonium et la base est choisie parmi un alcoolate, un amide, un hydrure et un alkylanion.

11. Initiateur liquide selon la revendication 10, **caractérisé en ce que** la base B est un alcoolate de métal alcalin ou alcalino-terreux.

12. Initiateur liquide selon au moins l'une des revendications 1 à 11, **caractérisé en ce que** l'agent de solvatation S est un composé organique aliphatique, cycloaliphatique ou aromatique, qui présente des éléments structuraux de solvatation qui ne comportent pas d'atomes d'hydrogène de fonction azide.

13. Initiateur liquide selon la revendication 12, **caractérisé en ce que** S est un composé aprotique polaire choisi dans le groupe constitué par des polyglycols éthérifiés, des esters liquides d'acide phtalique, des urées N-alkylées, des carboxamides N-alkylés ou des mélanges de ceux-ci.

14. Initiateur liquide selon la revendication 13, **caractérisé en ce que** l'urée est une tétraalkylurée ayant de 1 à 20 atomes de carbone, en particulier choisie dans le groupe constitué par la tétraméthylurée, la tétraéthylurée, la tétrabutylurée et une structure cyclique de formule générale I 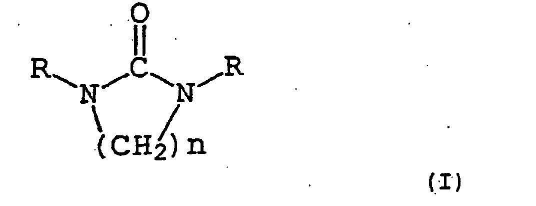 dans laquelle R est un radical alkyle ayant de 1 à 5 atomes de carbone, en particulier le radical méthyle, et n est 2 ou 3.

15. Initiateur liquide selon la revendication 13, **caractérisé en ce que** S est un carboxamide cyclique N-alkylé à 5-7 chaînons et le radical alkyle comporte de 1-12 atomes de carbone, des hétéroatomes pouvant également être contenus.

16. Initiateur liquide selon la revendication 13, **caractérisé en ce que** S est la N-méthylpyrrolidone, la N-octylpyrrolidone, la N-cyclohexylpyrrolidone, le N-octylcaprolactame ou un mélange de ceux-ci.

17. Initiateur liquide selon au moins l'une des revendications 1 à 16, **caractérisé en ce qu'**il contient en outre des additifs utiles à la préparation et/ou à l'utilisation.

18. Initiateur liquide selon au moins l'une des revendications 1 à 17, **caractérisé en ce que** le produit de réaction a été obtenu avec la condition que B:P:C ont été utilisés dans un rapport de 0,2-1,1:0,2-4:1.

19. Initiateur liquide selon la revendication 18, **caractérisé en ce que** le rapport molaire B:P:C est 0,8-1,1:0,8-1,2:1.

20. Procédé pour la préparation d'un initiateur liquide selon au moins l'une des revendications 1 à 19, **caractérisé en ce que** le produit de réaction dans l'agent de solvatation S est préparé avec introduction d'un gaz inerte et à l'abri de l'humidité, dans la plage allant de la température ambiante à 140°C, des solvants de faible masse moléculaire pour la base et des produits de neutralisation de la base, en particulier des alcools de faible masse moléculaire, étant éliminés.

21. Procédé selon la revendication 20, **caractérisé en ce que**, dans une étape préliminaire, on fait réagir le composé P avec la base B, de sorte que P se trouve sous forme basique, et **en ce qu'**on fait réagir ensuite le composé déprotoné P avec le carbodiimide, puis on effectue la conversion en l'agent de solvatation.

22. Procédé selon la revendication 20 ou 21, **caractérisé en ce qu'**on dissout P séparément dans une partie de l'agent de solvatation S et on convertit P en la forme sel anionique par addition d'une base B et on élimine les produits volatils de réaction ainsi que les résidus de solvants et d'agents protecteurs gênant la polymérisation et **en ce qu'**on réunit ensuite le carbodiimide dans l'agent de solvatation S et le composé déprotoné P dans l'agent de solvatation S, et on les convertit en l'initiateur liquide.

23. Procédé selon la revendication 20 ou 21, **caractérisé en ce qu'**on dissout simultanément C et P dans S et on ajoute ensuite B, à la suite de quoi on élimine la base sous la forme protonée.

24. Produit granulé polymère pouvant être préparé par polymérisation anionique continue ou discontinue de lactame avec un initiateur liquide selon au moins l'une des revendications 1 à 19.

25. Produit granulé polymère selon la revendication 24, **caractérisé en ce qu'**on utilise comme lactame le lactame-6 si/ou le lactame-12.

26. Produit granulé polymère selon la revendication 24 ou 25, **caractérisé en ce que** l'initiateur liquide est ajouté à la masse fondue de lactame à une concentration de 0,3 à 10 % en poids.

27. Initiateur liquide selon la revendication 26, **caractérisé en ce qu'**on ajuste une concentration de 0,5 à 3 % en poids.

28. Produit granulé polymère selon au moins l'une des revendications 24 à 27, **caractérisé en ce que** le produit granulé polymère est préparé en continu sur une extrudeuse à double vis.

29. Utilisation de l'initiateur liquide selon la revendication 1 ou 9, pour la préparation directe d'objets utilitaires à base de polylactame dans un procédé continu ou discontinu du type coulée de monomère, extrusion, moulage par injection, centrifugation et rotation, procédé de pultrusion, de trempage et d'injection, l'initiateur liquide étant chaque fois ajouté à la masse fondue de lactame.
